(19) Europäisches Patentamt / European Patent Office / Office européen des brevets

(11) **EP 3 285 975 B1**

(12) **EUROPÄISCHE PATENTSCHRIFT**

(45) Veröffentlichungstag und Bekanntmachung des Hinweises auf die Patenterteilung:
**15.02.2023 Patentblatt 2023/07**

(21) Anmeldenummer: **16720768.7**

(22) Anmeldetag: **22.04.2016**

(51) Internationale Patentklassifikation (IPC):
**B25J 9/16** *(1985.01)* **G05B 19/4061** *(1995.01)*

(52) Gemeinsame Patentklassifikation (CPC):
**B25J 9/1666; B25J 9/1671; G05B 2219/39091;**
G05B 2219/39097; G05B 2219/40512;
G05B 2219/40515; G05B 2219/40516

(86) Internationale Anmeldenummer:
**PCT/EP2016/059062**

(87) Internationale Veröffentlichungsnummer:
**WO 2016/170144 (27.10.2016 Gazette 2016/43)**

(54) **STEUERN UND/ODER REGELN VON MOTOREN EINES ROBOTERS**

CONTROLLING AND/OR REGULATING MOTORS OF A ROBOT

COMMANDE ET/OU RÉGULATION DE MOTEURS D'UN ROBOT

(84) Benannte Vertragsstaaten:
**AL AT BE BG CH CY CZ DK EE ES FI FR GB GR HR HU IE IS IT LI LT LU LV MC MK MT NL NO PL PT RO RS SE SI SK SM TR**

(30) Priorität: **22.04.2015 DE 102015106227**

(43) Veröffentlichungstag der Anmeldung:
**28.02.2018 Patentblatt 2018/09**

(73) Patentinhaber: **Kastanienbaum GmbH**
**80538 München (DE)**

(72) Erfinder:
• **HADDADIN, Sami**
**30173 Hannover (DE)**
• **MANSFELD, Nico**
**81243 München (DE)**

(74) Vertreter: **Rösler, Frank**
**Rösler · Rasch · van der Heide & Partner**
**Patent- und Rechtsanwälte PartG mbB**
**Bodenseestraße 18**
**81241 München (DE)**

(56) Entgegenhaltungen:
**WO-A1-2009/055707 WO-A1-2009/055707**

• **NICO MANSFELD ET AL: "Reaching desired states time-optimally from equilibrium and vice versa for visco-elastic joint robots with limited elastic deflection", 2014 IEEE/RSJ INTERNATIONAL CONFERENCE ON INTELLIGENT ROBOTS AND SYSTEMS, 14. September 2014 (2014-09-14), Seiten 3904-3911, XP055296563, DOI: 10.1109/IROS.2014.6943111 ISBN: 978-1-4799-6931-9**
• **J. VANNOY ET AL: "Real-Time Adaptive Motion Planning (RAMP) of Mobile Manipulators in Dynamic Environments With Unforeseen Changes", IEEE TRANSACTIONS ON ROBOTICS., Bd. 24, Nr. 5, 1. Oktober 2008 (2008-10-01), Seiten 1199-1212, XP055296868, US ISSN: 1552-3098, DOI: 10.1109/TRO.2008.2003277**
• **DE LUCA A: "Decoupling and feedback linearization of robots with mixed rigid/elastic joints", ROBOTICS AND AUTOMATION, 1996. PROCEEDINGS., 1996 IEEE INTERNATIONAL CONFERENCE ON MINNEAPOLIS, MN, USA 22-28 APRIL 1996, NEW YORK, NY, USA,IEEE, US, Bd. 1, 22. April 1996 (1996-04-22), Seiten 816-821, XP010162848, DOI: 10.1109/ROBOT.1996.503874 ISBN: 978-0-7803-2988-1**

- Nico Mansfeld ET AL: "Reaching desired states time-optimally from equilibrium and vice versa for visco-elastic joint robots with limited elastic deflection", 2014 IEEE/RSJ International Conference on Intelligent Robots and Systems, 1 September 2014 (2014-09-01), pages 3904-3911, XP055296563, DOI: 10.1109/IROS.2014.6943111 ISBN: 978-1-4799-6931-9
- J. Vannoy ET AL: "Real-Time Adaptive Motion Planning (RAMP) of Mobile Manipulators in Dynamic Environments With Unforeseen Changes", IEEE TRANSACTIONS ON ROBOTICS., vol. 24, no. 5, 1 October 2008 (2008-10-01), pages 1199-1212, XP055296868, US ISSN: 1552-3098, DOI: 10.1109/TRO.2008.2003277
- DE LUCA A: "Decoupling and feedback linearization of robots with mixed rigid/elastic joints", ROBOTICS AND AUTOMATION, 1996. PROCEEDINGS., 1996 IEEE INTERNATIONAL CONFERENCE ON MINNEAPOLIS, MN, USA 22-28 APRIL 1996, NEW YORK, NY, USA,IEEE, US, vol. 1, 22 April 1996 (1996-04-22), pages 816-821, XP010162848, DOI: 10.1109/ROBOT.1996.503874 ISBN: 978-0-7803-2988-1

**Beschreibung**

Die Erfindung betrifft ein Verfahren zum Steuern und/oder Regeln von Motoren eines Roboters, wobei der Roboter Roboterglieder aufweist, die über eine Anzahl N Gelenkverbindungen $GEL_n$ verbunden sind. Weiterhin betrifft die Erfindung eine Vorrichtung zur Steuerung und/oder Regelung von Motoren eines ebensolchen Roboters, einen Roboter mit einer ebensolchen Steuer- oder Regelvorrichtung, ein Computersystem, ein digitales Speichermedium, ein Computer-Programm-Produkt, und Computer-Programm.

Die verbundenen Roboterglieder bilden bevorzugt einen Roboter-Manipulator. Unter dem Begriff "Roboter-Manipulator" wird eine Vorrichtung eines Roboters verstanden, die die physikalische Interaktion des Roboters mit der Umgebung ermöglicht: Der Roboter-Manipulator ist ein beweglicher Teil des Roboters, der eine mechanische Arbeit des Roboters durchführt, und somit mit seiner Umgebung mechanisch interagieren kann. Typischerweise ist der Roboter-Manipulator als Roboterarm ausgestaltet, der mehrere Manipulatorglieder (Armglieder) aufweist, die über Gelenkverbindungen gelenkig verbunden sind. Die einzelnen Gelenkverbindungen sind aktorisch einstellbar, so dass der Roboterarm seine Form und seine Position und Lage im Raum (relativ zum (Rest)Roboter) verändern kann. Der Roboter-Manipulator weist zudem, typischerweise an seinem freien Ende, einen Effektor auf, der die eigentliche mechanische Interaktion mit der Umgebung des Roboters durchführt. Der Effektor umfasst hierzu vorzugsweise Greifer und/oder Werkzeuge zur mechanischen Interaktion mit Objekten.

Die aktorisch oder motorisch einstellbaren Gelenkverbindungen können starr ausgelegt sein oder eine definierte intrinsische Elastizität aufweisen, so dass im letzteren Fall der Roboter-Manipulator insgesamt definierte elastische Eigenschaften aufweist. Speziell die Steuerung/Regelung von Roboter-Manipulatoren mit elastischen Gelenken rückte in den letzten zwei Jahrzehnten stärker in das Zentrum des Interesses. Zum einen, weil durch die höheren Anforderung in der Industrie an Geschwindigkeit und Traglasten der Roboter auch bei überdimensionierten und möglichst starr ausgelegten Antrieben elastische Verformungen und dynamische Wechselwirkungen einen nicht zu vernachlässigenden Einfluss auf die Bewegung haben. Zum anderen, weil in mehr und mehr Robotern Elastizitäten absichtlich eingesetzt werden, um z. B. eine Interaktion mit Menschen durch die passive Nachgiebigkeit des Roboters zu erleichtern, oder um die Dynamik des biologischen Bewegungsapparates nachzubilden, und um Möglichkeiten der Speicherung potentieller Energie zu nutzen.

Dokument XP055296563 betrifft die optimale Steuerung, insbesondere die Ermittlung einer optimalen Bremssteuerung, für einen Roboter mit viskoelastischen Gelenken.

Dokument XP055296868 bezieht sich auf die adaptive Trajektorienplanung in Echtzeit für redundante Roboter in dynamischen Umgebungen mit sich bewegenden Hindernissen mit unbekannten Trajektorien.

Die Aufgabe der vorliegenden Erfindung ist es, ein verbessertes Verfahren zum Steuern/Regeln von Motoren eines Roboters anzugeben, bei dem die Motoren Gelenkverbindungen ansteuern, die Roboterglieder verbinden, wobei eine Anwendung des Verfahrens eine geringe Rechenkapazität erfordert, und somit zur Echtzeitsteuerung und -regelung der (Antriebs-) Motoren des Roboters eingesetzt werden kann.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung, sowie der Erläuterung von Ausführungsbeispielen der Erfindung, die in den Figuren dargestellt sind.

Basierend auf den vorstehenden Ausführungen wird als ein erster Aspekt der Erfindung ein Verfahren zum Steuern und Regeln von Motoren $MOT_m$ eines Roboters, mit m = 1, 2, ...M, vorgeschlagen, wobei der Roboter Roboterglieder aufweist, die über eine Anzahl N Gelenkverbindungen $GEL_n$ verbunden sind, mit n = 1, 2, ..., N; wobei Gelenkwinkel der Gelenkverbindungen $GEL_n$ mittels zugeordneter Motoren $MOT_m$ einstellbar sind; wobei $Z(t_k) = \{z_p(t_k)\}$ ein Zustand der Roboterglieder in einem Zeitschritt $t_k$ ist, wobei gilt: k = 0, 1, 2, 3, ... und p = 1, 2, ..., P; wobei ein erstes System gekoppelter Bewegungsgleichungen $BG_G$ vorgegeben ist, das eine Rigid-Body-Dynamik oder eine Flexible-Body-Dynamik des Roboter-Manipulators beschreibt, wobei im ersten System der Bewegungsgleichungen $BG_G$ $u_m(t_k)$ eine Stellgröße für den jeweiligen Motor $MOT_m$ ist, und wobei für das erste System der gekoppelten Bewegungsgleichungen $BG_G$ Beschränkungen der Stellgrößen $u_m(t_k)$ und Beschränkungen von Zuständen $Z(t_k)$ der verbundenen Roboterglieder vorgegeben sind.

Die Gelenkverbindungen $GEL_n$ können eine definierte intrinsische Elastizität aufweisen, die mit der Flexible-Body-Dynamik beschrieben wird. Sie können auch starr ausgelegt werden, was durch eine Rigid-Body-Dynamik beschrieben wird. Die Roboterglieder können seriell und oder parallel angeordnet sein. Die Gelenkverbindungen $GEL_n$ können beispielsweise Einfach-Gelenke oder Koppel-Gelenke sein. Eine Gelenkverbindung $GEL_n$ kann eine oder mehrere Gelenkachsen haben, um die die Gelenkverbindung verstellbar ist. Einer mehrachsig verstellbaren Gelenkverbindung $GEL_n$ können ein oder mehrere Motoren $MOT_m$ zur Verstellung der mehreren Gelenkachsen zugeordnet sein. Bevorzugt ist N = M und n = m, was bedeutet, dass jede Gelenkverbindung um oder entlang einer Achse verstellbar ist, und zur Verstellung pro Gelenkverbindung jeweils ein Motor vorhanden ist.

Der Begriff "Motor" ist vorliegend breit gefasst zu verstehen. Er umfasst im weitesten Sinne alle ansteuerbaren Aktoren, insbesondere Elektromotoren, Schrittmotoren Linearmotoren, aber auch Piezoelemente etc., die eine entsprechende Positionierung/Achswinkelstellung von Gelenkverbindungen $GEL_n$ der Roboter-Glieder ermöglichen.

Die Roboterglieder sind in einer bevorzugten Ausführungsform seriell angeordnet und bilden bspw. einen Roboter-Manipulator. Die Roboterglieder werden vorliegend als starr angenommen, was der Realität in den überwiegenden Fällen hinreichend nahe kommt.

Der Begriff "Zustand Z(t)" bezeichnet vorliegend insbesondere einen mechanischen/ dynamischen Zustand der Roboterglieder, der Gelenkverbindungen $GEL_n$ und/oder der Motoren $MOT_m$, beispielsweise mit einigen oder allen folgenden zeitabhängigen Variablen $Zp(tk)$:

- Position, Geschwindigkeit, Beschleunigung der Gelenkverbindungen,
- Stellwinkel, Stellwinkelgeschwindigkeit, Stellwinkelbeschleunigung der jeweiligen Gelenkverbindung $GEL_n$,
- Position, Geschwindigkeit, Beschleunigung des jeweiligen Motors $MOT_m$;
- Position, Lage, Lageveränderung, Lageveränderungsgeschwindigkeit der Roboterglieder im Raum.

Die Dimension des Zustands Z(t) ist P.

Der Begriff "Stellgröße" $u_m(t)$ gibt vorliegend den Sollwert der jeweiligen Führungsgröße an und ist Eingangsgröße für die entsprechende Regelstrecke im Falle der Regelung oder Eingangsgröße für den entsprechenden Aktor (d.h. vorliegend die Motoren $MOT_m$) im Falle der Steuerung. Die Stellgröße kann bspw. eine elektrische Energie, eine elektrische Spannung, eine elektrische Stromstärke, oder das Motordrehmoment sein.

Beschränkungen von Stellgrößen $u_m(t)$ und Beschränkungen des Zustandes Z(t) bzw. der diesen Zustand definierenden Zustandsvariablen $z_p(t)$ können bspw. als Relationen zu vorgegebenen Grenzwerten bspw. $G1 < u_m(t) < G2$, oder $d(u_m(t))/dt < G3$ gegeben sein.

Das vorgeschlagene Verfahren gemäß dem ersten Aspekt umfasst folgende Schritte.

In einem Schritt erfolgt für das erste System gekoppelter Bewegungsgleichungen $BG_G$ ein Bereitstellen eines zweiten Systems von lokal äquivalenten entkoppelten Bewegungsgleichungen $BG_E$, das die Rigid-Body-Dynamik oder die Flexible-Body-Dynamik der verbundenen Roboterglieder beschreibt. Vorteilhaft wird das System der entkoppelten Bewegungsgleichungen $BG_E$ durch eine Doppeldiagonalisierung der gekoppelten Bewegungsgleichungen $BG_G$ oder durch ein Lösen des verallgemeinerten Eigenwertproblems der gekoppelten Bewegungsgleichungen $BG_G$ ermittelt.

In einem weiteren Schritt erfolgt ein Bereitstellen von in das zweite System transformierten Beschränkungen der Stellgrößen $u_m(t_k)$ und von in das zweite System transformierten Beschränkungen der Zustände $Z(t_k)$. Die gekoppelten Bewegungsgleichungen $BG_G$ und die entkoppelten Bewegungsgleichungen $BG_E$ sind durch entsprechende Transformationen ineinander überführbar.

In einem weiteren Schritt erfolgt ein Bereitstellen des in das zweite System transformierten Zustands $Z(t_k)$ als $Z^*(t_k)$.

In einem weiteren Schritt erfolgt für das zweite System entkoppelter Bewegungsgleichungen $BG_E$ ein Vorgeben eines Zielzustandes $SZ^*$ des Roboter-Manipulators, der ausgehend von dem Zustand $Z^*(t_k)$ erreicht werden soll, und ein Vorgeben einer oder mehrerer Bedingungen $BD^*$ und/oder einer oder mehrerer Kennzahlen $KZ^*$, die definieren, wie der Zielzustand $SZ^*$ erreicht werden soll. Der Zielzustand $SZ^*$ wird im zweiten System entkoppelter Bewegungsgleichungen $BG_E$, vorzugsweise als $SZ^* = \{z_p^*\}$ mit $p = 1, 2, ..., P$, vorgegeben.

In einem weiteren Schritt erfolgt in dem zweiten System der entkoppelten Bewegungsgleichungen $BG_E$ ein Prädizieren einer Zustandstrajektorie $ZT^*(t)$ und zugeordneten Stellgrößentrajektorien $uT^*_m(t)$ abhängig von dem Zustand $Z^*(t_k)$ und dem Zielzustand $SZ^*$ unter Einhaltung der Bedingungen $BD^*$, der Kennzahlen $KZ^*$, der transformierten Beschränkungen der Stellgrößen $u_m(t_k)$, und der transformierten Beschränkungen der Zustände $Z(t_k)$ für einen Zeitraum von $t = t_k$ bis $t = t_{k+W}$, wobei $\Delta t = t_{k+W} - t_k$ ein vorgegebener Prädiktionszeitraum ist. Vorzugsweise ist der Prädiktionszeitraum derart gewählt, dass der Zielzustand $SZ^*$ innerhalb des Prädiktionszeitraums erreicht wird.

In einem weiteren Schritt erfolgt ein Transformieren der Stellgrößentrajektorien $uT^*_m(t)$ und der Zustandstrajektorien $ZT^*(t)$ in das erste System der gekoppelten Bewegungsgleichungen $BG_G$ zur Erzeugung von Stellgrößentrajektorien $uT_m^{**}(t)$ und von Zustandstrajektorien $ZT^{**}(t)$.

In einem weiteren Schritt erfolgt aus den Stellgrößentrajektorien $uT_m^{**}(t)$ ein Ermitteln von Stellgrößen $u_m(t_{k+1})$ für den nächsten Zeitschritt $k+1$ und ein Regeln der Motoren $MOT_m$ mit den Stellgrößen $u_m(t_{k+1})$.

In einem weiteren Schritt erfolgt aus den Zustandstrajektorien $ZT^{**}(t)$ und/oder auf Basis von Sensordaten eines Erfassungssystems des Zustands Z(t) ein Ermitteln des Zustands $Z(t_{k+1})$ für den Zeitschritt $k+1$.

In einem weiteren Schritt erfolgt für $Z(t_k) = Z(t_{k+1})$ ein erneutes Durchlaufen des Verfahrens solange bis ein vorgegebenes Abbruchkriterium oder der Zielzustand SZ im ersten System der gekoppelten Bewegungsgleichungen $BG_G$ erreicht ist. Der Zielzustand SZ ergibt sich bspw. durch Transformation des Zielzustandes $SZ^*$ in das erste System der gekoppelten Bewegungsgleichungen $BG_G$ oder er wird entsprechend für das System der gekoppelten Bewegungsgleichungen $BG_G$ vorgegeben.

Alternativ wird als zweiter Aspekt der Erfindung ein Verfahren zum Steuern und Regeln von Motoren $MOT_m$

eines Roboters, mit m = 1, 2, ...M vorgeschlagen, wobei der Roboter Roboterglieder aufweist, die über eine Anzahl N Gelenkverbindungen $GEL_n$ verbunden sind, mit n = 1, 2, ..., N; Gelenkwinkel der Gelenkverbindungen $GEL_n$ mittels zugeordneter Motoren $MOT_m$ einstellbar sind; $Z(t_k) = \{z_p(t_k)\}$ ein Zustand der Roboterglieder in einem Zeitschritt $t_k$ ist, wobei gilt: k = 0, 1, 2, 3, ... und p = 1, 2, ..., P; ein erstes System gekoppelter Bewegungsgleichungen $BG_G$ vorgegeben ist, das eine Rigid-Body-Dynamik oder eine Flexible-Body-Dynamik des Roboter-Manipulators beschreibt; im ersten System der Bewegungsgleichungen $BG_G$ $u_m(t_k)$ eine Stellgröße für den jeweiligen Motor $MOT_m$ ist, und für das erste System der gekoppelten Bewegungsgleichungen $BG_G$ Beschränkungen der Stellgrößen $u_m(t_k)$ und Beschränkungen von Zuständen $Z(t_k)$ der verbundenen Roboterglieder vorgegeben sind.

Das Verfahren gemäß dem zweiten Aspekt umfasst folgende Schritte. In einem Schritt erfolgt für das erste System gekoppelter Bewegungsgleichungen $BG_G$ ein Bereitstellen eines zweiten Systems von lokal äquivalenten entkoppelten Bewegungsgleichungen $BG_E$, das die Rigid-Body-Dynamik oder die Flexible-Body-Dynamik der verbundenen Roboterglieder beschreibt, und eines Regler- und/oder Steuergesetzes RG für die Stellgrößen $u_m(t_k)$. In einem weiteren Schritt erfolgt ein Bereitstellen von in das zweite System transformierten Beschränkungen der Stellgrößen $u_m(t_k)$, von in das zweite System transformierten Beschränkungen der Zustände $Z(t_k)$, und von dem in das zweite System transformierten Regler- und/oder Steuergesetz RG als RG*: In einem weiteren Schritt erfolgt ein Bereitstellen des in das zweite System transformierten Zustands $Z(t_k)$ als $Z^*(t_k)$. In einem weiteren Schritt erfolgt für das zweite System entkoppelter Bewegungsgleichungen $BG_E$ ein Vorgeben einer oder mehrerer Bedingungen BD** und/oder einer oder mehrerer Kennzahlen KZ**, die definieren, in welchem Rahmen das Regler- und/oder Steuergesetz RG angewendet werden soll. In einem weiteren Schritt erfolgt in dem zweiten System der entkoppelten Bewegungsgleichungen $BG_E$ ein Prädizieren einer Zustandstrajektorie $ZT^*(t)$ und zugeordneter Stellgrößentrajektorien $uT^*_m(t)$ abhängig von dem Zustand $Z^*(t_k)$ und auf Basis des in das zweite System transformierten Regler- und/oder Steuergesetzes RG unter Einhaltung der transformierten Beschränkungen der Stellgrößen $u_m(t_k)$, der Bedingungen BD*, der Kennzahlen KZ*, und der transformierten Beschränkungen der Zustände $Z(t_k)$ für einen Zeitraum von $t = t_k$ bis $t = t_{k+W}$, wobei $\Delta t = t_{k+W} - t_k$, mit W > k, ein vorgegebener Prädiktionszeitraum ist. In einem weiteren Schritt erfolgt ein Transformieren der Stellgrößentrajektorien $uT^*_m(t)$ und der Zustandstrajektorien $ZT^*(t)$ in das erste System der gekoppelten Bewegungsgleichungen $BG_G$ zur Erzeugung von Stellgrößentrajektorien $uT_m^{**}(t)$ und von Zustandstrajektorien $ZT^{**}(t)$. In einem weiteren Schritt erfolgt aus den Stellgrößentrajektorien $uT_m^{**}(t)$ ein Ermitteln von Stellgrößen $u_m(t_{k+1})$ für den Zeitschritt k+1 und ein Regeln der Motoren $MOT_m$ mit den Stellgrößen $u_m(t_{k+1})$. In einem weiteren Schritt erfolgt aus den Zustandstrajektorien $ZT^{**}(t)$ und/oder auf Basis von Sensordaten eines Erfassungssystems des Zustands Z(t) ein Ermitteln des Zustands $Z(t_{k+1})$ für den Zeitschritt k+1. In einem weiteren Schritt erfolgt für $Z(t_k) = Z(t_{k+1})$ ein erneutes Durchlaufen des Verfahrens solange bis ein vorgegebenes Abbruchkriterium erreicht ist.

Das Verfahren gemäß zweitem Aspekt unterscheidet sich vom Verfahren gemäß erstem Aspekt darin, dass anstatt eines Zielzustandes SZ* ein Steuer- und Reglergesetz vorgegeben wird, das anhand vorgegebener Bedingungen BD* bzw. Kennzahlen KZ* angewandt wird. In beiden Verfahrensvarianten gilt bevorzugt: N = M und n = m. Die vorstehend vorgeschlagenen zwei Verfahren ermöglicht eine einfache, Rechenzeit sparende und hinreichend genaue Steuerung/Regelung der Motoren $MOT_m$. Das Verfahren wird bevorzugt automatisiert ausgeführt.

Vorteilhaft lässt sich das N-dimensionale System der gekoppelten Bewegungsgleichungen $BG_G$ durch folgende Gleichungen darstellen:

$$(30) \quad B = \tau_m - \tau_f - \tau_J$$

$$(31) \quad M(q)\ddot{q} = \tau_g + \tau_{ext} - \tau_J$$

$$(32) \quad \tau_J = K_J(\theta - q) + D_J(\dot{\theta} - \dot{q})$$

mit.

$\theta$ :     Positionsvektor der Motoren $MOT_m$
$q$ :     Positionsvektor der Gelenkverbindungen $GEL_n$
$B$ :     Trägheit der Motoren $MOT_m$
$M(q)$ :     konfigurationsabhängige Trägheitsmatrix der verbundenen Roboterglieder
$K_J$ :     Steifigkeitsmatrix der Gelenkverbindungen $GEL_n$
$D_J$ :     Dämpfungsmatrix der Gelenkverbindungen $GEL_n$
$\tau_m$ :     Drehmomente der Motoren $MOT_m$
$\tau_f$ :     Reibung der Motoren $MOT_m$

$\tau_g$ :        Gravitationsdrehmomente

$\tau_{ext}$ :      externe Drehmomente, Coriolisdrehmomente

t:          Zeit

Die Koppelung der Bewegungsgleichungen ergibt sich aus der konfigurationsabhängigen Trägheitsmatrix M(q) des Roboter-Manipulators.

Vorteilhaft wird zur Vereinfachung des vorstehenden Gleichungssystems der Einfluss der Gravitation und von Coriolisdrehmomenten und von sonstigen externen Drehmomenten gleich Null gesetzt ($\tau_g = \tau_{ext} = 0$). Dies ist in den meisten Fällen ohne zu großen Genauigkeitsnachteil möglich, und ermöglicht eine Reduzierung des Rechenaufwandes und somit eine verbesserte Echtzeitregelung/-steuerung.

In einer bevorzugten Weiterbildung sind die Beschränkungen von Zustandsgrößen $\{z_p(t_k)\}$ der verbundenen Roboterglieder im System der gekoppelten Bewegungsgleichungen $BG_G$ wie folgt vorgegeben:

$$(34) \quad |\varphi| = |\theta - q| \leq \varphi_{max} ,$$

und

$$(35) \quad |\dot{\theta}| \leq \dot{\theta}_{max} .$$

$$(36) \quad |\tau_m| \leq \tau_{max}$$

Damit wird der Betrag des Federwegs $|\varphi|$ der Gelenke $GEL_n$, der Betrag der Geschwindigkeiten $|\dot{\theta}|$ der Motoren $MOT_m$, und der Betrag der Motoren-Drehmomente $|\tau_m|$ durch entsprechend vorgegebene Grenzwerte $\varphi_{max}$, $\dot{\theta}_{max}$, $\tau_{max}$ begrenzt.

Die nachfolgenden Ausführungen beziehen sich auf das Verfahren gemäß dem ersten Aspekt der Erfindung.

In einer bevorzugten Weiterbildung ist der für das zweite System vorgegebene Zielzustand SZ* bzw. der in das erste System transformierte Zielzustand SZ = (SZ*)$^T$ zeitvariabel vorgegeben: SZ = SZ(t) und SZ* = SZ*(t). Bevorzugt wird der Zielzustand SZ(t) bzw. SZ*(t), den die verbundenen Roboterglieder im Rahmen der vorgegebenen Bedingungen BD* und/oder Kennzahlen KZ* einnehmen sollen, abhängig von in einer Umgebung des Roboters von einem Umgebungserfassungssystem erkannten Hindernissen ermittelt. Der Roboter kann dadurch derart gesteuert werden, dass eine Kollision mit Hindernissen in einer zeitvariablen Umgebung verhindert werden.

Vorteilhaft ist eine Bedingung BD*, dass der Zielzustand SZ* in minimaler Zeit erreicht wird, und/oder dass der Zielzustand SZ* mit minimalem Energiebedarf der Motoren $MOT_m$ erreicht wird und/oder dass der Zielzustand SZ* mit einem minimalen Bremsweg der Gelenkwinkel der Gelenkverbindungen $GEL_n$ erreicht wird, und/oder dass der Zielzustand SZ* mit einem minimalen Bremsweg der gesamten verbundenen Roboterglieder erreicht wird und/oder dass der Zielzustand SZ* unter keiner Unterschreitung eines Minimalabstandes der verbundenen Roboterglieder zu einem in einer Umgebung des Roboters vorhandenen Objekts erreicht wird.

Vorteilhaft ist ein Anfangszustand Z*($t_k$) ein Ruhezustand der Roboterglieder, bei dem eine Gelenkwinkelgeschwindigkeit aller Gelenkverbindungen $GEL_n$ gleich Null ist, der Zielzustand SZ* ein vorgegebener Bewegungszustand der Roboterglieder, wobei der Zielzustand SZ* in einer Minimalzeit erreicht werden soll.

Eine besonders bevorzugte Weiterbildung zeichnet sich dadurch aus, dass ein Anfangszustand Z*($t_k$) ein Bewegungszustand der verbundenen Roboterglieder ist, der Zielzustand SZ* ein Ruhezustand der Roboterglieder ist, bei dem eine Gelenkwinkelgeschwindigkeit aller Gelenkverbindungen $GEL_n$ gleich Null ist, und der Zielzustand SZ* in einer Minimalzeit erreicht werden soll. Dieses Szenario entspricht einem Bremsvorgang der verbundenen Roboterglieder aus einem Bewegungszustand in einen Ruhezustand in minimaler Zeit. Der Bremsvorgang könnte auch in einen Zielzustand SZ* aller verbundenen Roboterglieder münden, der zwar kein Ruhezustand ist, der aber nur noch eine minimale Restgeschwindigkeit aufweist, aufgrund der keine Schäden bei einer Kollision mit einem Objekt, insbesondere mit einem Menschen zu erwarten sind. Der Zielzustand SZ* könnte weiterhin eine Ausweichbewegung entgegengesetzt einer prädizierten Kollisionsrichtung mit einem erkannten Objekt sein.

Vorzugsweise wird basierend auf dem Anfangszustand Z*($t_k$) und dem Zielzustand SZ* ein Bremsweg BW* jedes der Roboterglieder prädiziert.

In einer bevorzugten Weiterbildung ist der Zielzustand SZ ein Zustand, in dem die verbundenen Roboterglieder bewegungslos sind. Vorzugsweise ist dabei der aktuelle Zustand Z($t_k$) ein Bewegungszustand, für den bspw. gilt: $\dot{q}(t) = \dot{q}_a$ und $\dot{\theta}(t) = \dot{\theta}_a$, und der Zielzustand SZ ist der Ruhezustand, für den gilt: $\dot{q}(t + \Delta t) = 0$ und $\dot{\theta}(t + \Delta t) = 0$, wobei $\dot{q}_a$ und

$\dot{\theta}_a$ vorgegebene Werte sind, und $\Delta t$ eine vorgegebene Zeit (bspw. die Minimalzeit) zum Erreichen des Zielzustandes SZ ist. Die Steuerungs-/Regelungsaufgabe besteht also darin, den Roboter-Manipulator aus einem bewegten Zustand in einen Ruhezustand zu bremsen, und dies in einer vorgegebenen oder insbesondere der minimalen Zeit $\Delta t$. Die Lösung dieser Aufgabe kann einen Roboter (Roboter-Manipulator) bspw. vor Kollisionen mit kurzfristig auftretenden Objekten schützen.

Natürlich lässt sich das Verfahren auch zur Steuerung/Regelung der Motoren $MOT_m$ in dem Fall nutzen, in dem der aktuelle Zustand $Z(t_k)$ ein Ruhezustand ist, für den gilt: $\dot{q}(t) = 0$ und $\dot{\theta}(t) = 0$, und der Zielzustand SZ ein Bewegungszustand ist, für den gilt: $\dot{q}(t + \Delta t) = \dot{q}_d$ und $\dot{\theta}(t + \Delta t) = \dot{\theta}_d$, wobei $\dot{q}_d$ und $\dot{\theta}_d$ vorgegebene Werte sind, und $\Delta t$ eine vorgegebene Zeit oder insbesondere eine Minimalzeit zum Erreichen des Zielzustandes SZ ist.

Eine Weiterbildung des vorgeschlagenen Verfahrens zeichnet sich dadurch aus, dass im System der entkoppelten Bewegungsgleichungen $BG_E$ für jede Gelenkverbindung $GEL_n$ eine Vorwärtstrajektorie $VT_i$ (Bremstrajektorie) einer künftigen Bewegung des Roboter-Manipulators ermittelt und bereitgestellt wird. Diese Vorwärtstrajektorie $VT_i$ umfasst prädizierte Positionen der Gelenkverbindung $GEL_n$. Vorteilhaft wird auf Basis der Vorwärtstrajektorien $VT_i$ für jede Gelenkverbindung $GEL_n$ ein Bremsweg $\Delta q_i = q_i(t+\Delta t) - q_i(t)$ ermittelt. Aus dem Bremsweg kann bspw. die Form bzw. Positionierung des Roboter-Manipulators im erreichten Ruhezustand ermittelt werden.

Eine weitere Verfahrensvariante zeichnet sich dadurch aus, dass die Stellgrößen $u_m*(t)$ im zweiten System der entkoppelten Bewegungsgleichungen $BG_E$ abhängig von der ermittelten Vorwärtstrajektorie $VT_i$ und/oder den Bremswegen $\Delta q_i$ ermittelt werden. Dies ermöglicht bspw. die Stellgrößen $u_i*(t)$ unter der Bedingung vorgegebener Bremswege, insbesondere minimaler Bremswege $\Delta q_i$ zu ermitteln.

Eine weitere Verfahrensvariante zeichnet sich dadurch aus, dass der Raum, der durch Motordrehmomente der Motoren $MOT_m$ aufgespannt ist, durch einen Hyperquader $\Omega$ beschreibbar ist, dessen Transformation in das System der entkoppelten Bewegungsgleichungen $BG_E$ einen Hyperquader $\Omega_V$ ergibt, wobei im System der entkoppelten Bewegungsgleichungen $BG_E$ basierend auf dem Hyperquader $\Omega_V$ ein größtmöglicher Hyperquader $\Omega_V'$ ermittelt wird, für den gilt, dass eine Rücktransformation des Hyperquaders $\Omega_V'$ in das System der gekoppelten Bewegungsgleichungen $BG_G$ vollständig innerhalb der Grenzen des Hyperquaders $\Omega$ liegt, wobei das Ermitteln der Stellgrößen $u_m*(t)$ nur auf dem Hyperquader $\Omega_V'$ erfolgt. Gleiches gilt analog für Motorgeschwindigkeit oder Motorbeschleunigung als Stellgrößen.

Ein weiterer Aspekt der Erfindung betrifft ein Computersystem, mit einer Datenverarbeitungsvorrichtung, wobei die Datenverarbeitungsvorrichtung derart ausgestaltet ist, dass ein Verfahren, wie vorstehend beschrieben, auf der Datenverarbeitungsvorrichtung ausgeführt wird.

Ein weiterer Aspekt der Erfindung betrifft ein digitales Speichermedium mit elektronisch auslesbaren Steuersignalen, wobei die Steuersignale so mit einem programmierbaren Computersystem zusammenwirken können, dass ein Verfahren, wie vorstehend beschrieben, ausgeführt wird.

Ein weiterer Aspekt der Erfindung betrifft ein Computer-Programm-Produkt mit auf einem maschinenlesbaren Träger gespeicherten Programmcode zur Durchführung des Verfahrens, wie vorstehend beschrieben, wenn der Programmcode auf einer Datenverarbeitungsvorrichtung ausgeführt wird.

Ein weiterer Aspekt der Erfindung betrifft ein Computer-Programm mit Programmcodes zur Durchführung des Verfahrens, wie vorstehend beschrieben, wenn das Programm auf einer Datenverarbeitungsvorrichtung abläuft. Dazu kann die Datenverarbeitungsvorrichtung als ein beliebiges aus dem Stand der Technik bekanntes Computersystem ausgestaltet sein.

Ein weiterer Aspekt der Erfindung betrifft eine Vorrichtung zum Steuern und Regeln von Motoren $MOT_m$ eines Roboters, mit m = 1, 2, ...M, wobei, der Roboter Roboterglieder aufweist, die über eine Anzahl N Gelenkverbindungen $GEL_n$ verbunden sind, mit n = 1, 2, ..., N; Gelenkwinkel der Gelenkverbindungen $GEL_n$ mittels zugeordneter Motoren $MOT_m$ einstellbar sind; $Z(t_k) = \{z_p(t_k)\}$ ein Zustand der Roboterglieder in einem Zeitschritt $t_k$ ist, wobei gilt: k = 0, 1, 2, 3, ... und p = 1, 2, ..., P; ein erstes System gekoppelter Bewegungsgleichungen $BG_G$ vorgegeben ist, das eine Rigid-Body-Dynamik oder eine Flexible-Body-Dynamik des Roboter-Manipulators beschreibt; im ersten System der Bewegungsgleichungen $BG_G$ $u_m(t_k)$ eine Stellgröße für den jeweiligen Motor $MOT_m$ ist; und für das erste System der gekoppelten Bewegungsgleichungen $BG_G$ Beschränkungen der Stellgrößen $u_m(t_k)$ und Beschränkungen von Zuständen $Z(t_k)$ der verbundenen Roboterglieder vorgegeben sind. Die Vorrichtung umfasst ein Mittel, mit dem für das erste System gekoppelter Bewegungsgleichungen $BG_G$ ein zweites System von lokal äquivalenten entkoppelten Bewegungsgleichungen $BG_E$, das die Rigid-Body-Dynamik oder die Flexible-Body-Dynamik der verbundenen Roboterglieder beschreibt, bereitgestellt wird; ein Mittel, mit dem in das zweite System transformierte Beschränkungen der Stellgrößen $u_m(t_k)$ und in das zweite System transformierte Beschränkungen der Zustände $Z(t_k)$; bereitgestellt werden; ein Vorgabemittel, mit dem der in das zweite System transformierte Zustand $Z(t_k)$ als $Z*(t_k)$ bereitgestellt wird; ein Mittel, mit dem für das zweite System entkoppelter Bewegungsgleichungen $BG_E$ ein Zielzustand SZ* des Roboter-Manipulators, der ausgehend von dem Zustand $Z*(t_k)$ erreicht werden soll, und eine oder mehrere Bedingungen BD* und/oder eine oder mehrere Kennzahlen KZ*, die definieren, wie der Zielzustand SZ* erreicht werden soll, vorgegeben werden; ein Mittel, mit dem in dem zweiten System der entkoppelten Bewegungsgleichungen $BG_E$ eine Zustandstrajektorie ZT*(t) und zugeordnete Stellgrößentrajektorien $uT*_m(t)$ abhängig von dem Zustand $Z*(t_k)$ und dem Zielzustand SZ* unter Einhaltung der Bedingungen BD*, der Kennzahlen KZ*, der transformierten Beschränkungen der Stellgrößen $u_m(t_k)$, und der transformierten Beschränkungen der Zustände $Z(t_k)$ für einen Zeitraum von $t = t_k$ bis $t = t_{k+W}$ prädiziert werden, wobei $\Delta t = t_{k+W} - t_k$ ein vorgegebener Prädiktionszeitraum ist; ein Mittel, mit dem die Stellgrößentrajektorien $uT^*_m(t)$ und die Zustandstrajektorien $ZT^*(t)$ in das erste System der gekoppelten Bewegungsgleichungen $BG_G$ zur Erzeugung von Stellgrößentrajektorien $uT_m^{**}(t)$ und von Zustandstrajektorien $ZT^{**}(t)$ transformiert werden; ein Mittel, mit dem aus den Stellgrößentrajektorien $uT_m^{**}(t)$ Stellgrößen $u_m(t_{k+1})$ für den Zeitschritt k+1 ermittelt werden und die Motoren $MOT_m$ mit den Stellgrößen $u_m(t_{k+1})$ geregelt werden; ein Mittel (208), mit dem aus den Zustandstrajektorien $ZT^{**}(t)$ und/oder auf Basis von Sensordaten eines Erfassungssystems des Zustands $Z(t)$ der Zustand $Z(t_{k+1})$ für den Zeitschritt k+1 ermittelt wird; und ein Mittel, das mit dem Vorgabemittel verbunden ist, und dem Vorgabemittel ein $Z(t_k)$ übermittelt, für das gilt: $Z(t_k) = Z(t_{k+1})$, solange bis ein vorgegebenes Abbruchkriterium oder der Zielzustand SZ/SZ* erreicht ist.

Ein weiterer Aspekt der Erfindung betrifft eine Vorrichtung zum Steuern und Regeln von Motoren $MOT_m$ eines Roboters, mit m = 1, 2, ...M, wobei der Roboter Roboterglieder aufweist, die über eine Anzahl N Gelenkverbindungen $GEL_n$ verbunden sind, mit n = 1, 2, ..., N; Gelenkwinkel der Gelenkverbindungen $GEL_n$ mittels zugeordneter Motoren $MOT_m$ einstellbar sind; $Z(t_k) = \{z_p(t_k)\}$ ein Zustand der Roboterglieder in einem Zeitschritt $t_k$ ist, wobei gilt: k = 0, 1, 2, 3, ... und p = 1, 2, ..., P; ein erstes System gekoppelter Bewegungsgleichungen $BG_G$ vorgegeben ist, das eine Rigid-Body-Dynamik oder eine Flexible-Body-Dynamik des Roboter-Manipulators beschreibt; im ersten System der Bewegungsgleichungen $BG_G$ $u_m(t_k)$ eine Stellgröße für den jeweiligen Motor $MOT_m$ ist; und für das erste System der gekoppelten Bewegungsgleichungen $BG_G$ Beschränkungen der Stellgrößen $u_m(t_k)$ und Beschränkungen von Zuständen $Z(t_k)$ der verbundenen Roboterglieder vorgegeben sind, umfassend ein Mittel mit dem für das erste System gekoppelter Bewegungsgleichungen $BG_G$ ein zweites System von lokal äquivalenten entkoppelten Bewegungsgleichungen $BG_E$, das die Rigid-Body-Dynamik oder die Flexible-Body-Dynamik der verbundenen Roboterglieder beschreibt, und ein Regler- und/oder Steuergesetzes RG für die Stellgrößen $u_m(t_k)$ bereitgestellt werden; ein Mittel, mit dem in das zweite System transformierte Beschränkungen der Stellgrößen $u_m(t_k)$, in das zweite System transformierte Beschränkungen der Zustände $Z(t_k)$, und in das zweite System transformiertes Regler- und/oder Steuergesetz RG als RG* bereitgestellt werden; ein Vorgabemittel, mit dem der in das zweite System transformierte Zustand $Z(t_k)$ als $Z^*(t_k)$ bereitgestellt wird; ein Mittel, mit dem für das zweite System entkoppelter Bewegungsgleichungen $BG_E$ ein oder mehrere Bedingungen BD* und/oder eine oder mehrere Kennzahlen KZ* vorgegeben werden, die definieren, wie der Zielzustand SZ* erreicht werden soll; ein Mittel, mit dem in dem zweiten System der entkoppelten Bewegungsgleichungen $BG_E$ eine Zustandstrajektorie $ZT^*(t)$ und zugeordnete Stellgrößentrajektorien $uT^*_m(t)$ abhängig von dem Zustand $Z^*(t_k)$ und auf Basis des in das zweite System transformierten Regler- und/oder Steuergesetzes RG unter Einhaltung der transformierten Beschränkungen der Stellgrößen $u_m(t_k)$, und der transformierten Beschränkungen der Zustände $Z(t_k)$ mit mindestens einer Genauigkeit von < 20 % für einen Zeitraum von $t = t_k$ bis $t = t_{k+W}$ prädiziert werden, wobei $\Delta t = t_{k+W} - t_k$, mit W > k, ein vorgegebener Prädiktionszeitraum ist; ein Mittel, mit dem die Stellgrößentrajektorien $uT^*_m(t)$ und die Zustandstrajektorien $ZT^*(t)$ in das erste System der gekoppelten Bewegungsgleichungen $BG_G$ zur Erzeugung von Stellgrößentrajektorien $uT_m^{**}(t)$ und von Zustandstrajektorien $ZT^{**}(t)$ transformiert werden; ein Mittel, mit dem aus den Stellgrößentrajektorien $uT_m^{**}(t)$ Stellgrößen $u_m(t_{k+1})$ für den Zeitschritt k+1 ermittelt werden und die Motoren $MOT_m$ mit den Stellgrößen $u_m(t_{k+1})$ geregelt werden; ein Mittel, mit dem aus den Zustandstrajektorien $ZT^{**}(t)$ und/oder auf Basis von Sensordaten eines Erfassungssystems des Zustands $Z(t)$ der Zustand $Z(t_{k+1})$ für den Zeitschritt k+1 ermittelt wird; und ein Mittel, das mit dem Vorgabemittel verbunden ist, und dem Vorgabemittel ein $Z(t_k)$ übermittelt, für das gilt: $Z(t_k) = Z(t_{k+1})$, solange bis ein vorgegebenes Abbruchkriterium erreicht ist.

Die angegebenen Mittel der vorgeschlagenen Vorrichtungen können als ein Rechnersystem ausgeführt sein, das zumindest umfasst: einen Prozessor, der die angegebenen Berechnungen bzw. die Steuerung/Reglungsaufgaben ausführt, eine Eingabeschnittstelle (Tastatur, Mouse, Internet, WLAN, Bluetooth etc.), eine Ausgabeschnittstelle (Monitor, Drucker, Lautsprecher, etc.) und eine Speichereinheit (Festplatte/ CD / SIM-Karte etc.).

Schließlich betrifft ein weiterer Aspekt der Erfindung einen Roboter mit einer Vorrichtung, wie vorstehend beschrieben.

Die nachfolgenden Ausführen erläutern den Erfindungsgedanken näher am konkreten Beispiel einer Steuerung/Reglung eines Roboter-Manipulators, dessen Gelenke durch Motoren einstellbar sind.

Um die Sicherheit von in der Umgebung des Roboters befindlichen Personen und/oder die des Roboters zu gewährleisten, ist es in vielen Situationen notwendig, einen Roboter-Manipulator zu bremsen. Ein Teilaspekt betrifft ein Verfahren zur Schätzung einer Bremstrajektorie (d.h. einer Bremswegprädiktion) des Roboter-Manipulators ausgehend von einem aktuellen Zustand des Roboter-Manipulators. Die Schätzung beinhaltet eine finale Stillstands-Position des Roboter-Manipulators, die dazugehörige Stillstandszeit sowie den vollen zeitlichen Verlauf der Gelenkwinkel/Roboterposition (Kinematik) und Dynamik vom Start des Bremsvorgangs bis zum Stillstand des Roboter-Manipulators. Ist die Bremstrajektorie ermittelt, lassen sich unter anderem nachfolgende Fragestellungen beantworten:

• Wie groß ist der Abstand eines oder mehrerer Punkte des Roboter-Manipulators zu einem oder mehreren Punkt/en, Gegenständen/Hindernissen in einer Umgebung des Roboters?

- Welche Eigenschaften haben die Teile des Roboter-Manipulators (bspw. Ort, Geschwindigkeit und Masse des jeweiligen Teils), im Falle einer Kollision des Roboters bspw. mit einer Person?
- Wie groß ist für den Kollisionsfall das Gefährdungspotential für den Roboter bzw. eine Person?
- Treten für Teile des Roboter-Manipulators Verletzungen von vorgegebenen Grenzwerten, bspw. Gelenkpositionen und/oder Gelenkgeschwindigkeiten oder Fehlerzustände beim Bremsvorgang auf?
- Welcher von mehreren vorhandenen Bremsreglern erfüllt ein bestimmtes Kriterium, wie bspw. einen vorgegebenen Bremsweg, einen vorgegebene Kollisionsvermeidung oder einen Einhaltung von Grenzwerten, am besten?

Mit Hilfe der Antworten auf diese Fragen sind unter anderen folgende (Re)Aktionen möglich:

- Vermeidung von Kollisionen, durch Initiieren eines Bremsvorgangs des Roboter-Manipulators, solange die Schätzung keine Kollision vorhersieht.
- Zulassung von Kollisionen des Roboter-Manipulators unter Gewährleistung der Unversehrtheit des Roboters/einer Person, indem der Bremsvorgang dann initiiert wird, wenn die Bremswegprädiktion keine Gefährdung für den Roboter/die Person prädiziert.
- Auswahl eines von mehreren potentiell zur Verfügung stehenden Bremsreglern, Reglerparametern und Parametern der Bremstrajektorie.

Nachfolgend werden hierzu zwei Modelle vorgeschlagen, die vorteilhaft zur Beschreibung einer Dynamik des Roboter-Manipulators verwendet werden können.

Das erste Modell beschreibt die Dynamik eines Roboter-Manipulators mit starren Gelenkverbindungen. Der Roboter-Manipulator wird dabei als offene kinematische Kette mit starren Körpern und n rotatorischen Gelenkverbindungen $GEL_n$ beschrieben. Die Dynamik des Roboter-Manipulators mit starren Gelenkverbindungen $GEL_n$ ist im ersten Modell durch folgende Differentialgleichung gegeben:

$$(1) \qquad M(q)\ddot{q} + C(q,\dot{q})\dot{q} + g(q) = \tau + \tau_f + \tau_{ext}$$

wobei die generalisierten Koordinaten $q \in R^n$ die Positionen der n Gelenkverbindungen $GEL_n$ sind. $M(q) \in R^{n \times n}$ ist die symmetrische und positiv definite Massenmatrix; $C(q,\dot{q}) \in R^n$ die Coriolis- und Zentrifugalkräfte; und $g(q) \in R^n$ der Gravitationsvektor. $\tau \in R^n$ ist das Motordrehmoment; $\tau_f \in R^n$ das Motorreibmoment; und $\tau_{ext} \in R^n$ das externe Drehmoment. Es wird angenommen, dass $\tau_f = \tau_{ext} = 0$ gilt. Die Motordrehmomente, die Motorgeschwindigkeiten und die Positionen jedes Gelenkes i sind typischerweise folgendermaßen beschränkt:

$$(2) \qquad |\tau_i| \le \tau_{max,i}$$

$$(3) \qquad |q_i| \le q_{max,i}$$

$$(4) \qquad |\dot{q}_i| \le \dot{q}_{max,i}$$

mit: $i = l, ..., n.$

Andere Beschränkungen sind möglich. Die Positionen $q_i$ können auch unbeschränkt sein.

Das nachfolgende zweite Modell beschreibt einen Roboter-Manipulator mit elastischen Gelenkverbindungen $GEL_n$. Für Roboter-Manipulatoren, die über definiert intrinsisch elastische Gelenkverbindungen verfügen, wird von folgender Dynamik ausgegangen:

$$(5) \qquad M(q)\ddot{q} + C(q,\dot{q})\dot{q} + g(q) = \tau_J + \tau_{ext}$$

$$(6) \qquad B\ddot{\theta} + \tau_J = \tau + \tau_f$$

$$(7) \qquad \tau_J = K_J(\theta - q) = K_J(\varphi)$$

Hierbei ist $\theta \in R^n$ die Motorposition, $q \in R^n$ die Abtriebsposition, $\tau_J \in R^n$ das elastische Drehmoment, $K_J = diag\{k_{J,i}\} \in R^{n \times n}$ die diagonale, positiv definite Steifigkeitsmatrix und $B = diag\{b_i\} \in R^{n \times n}$ die diagonale, positiv definite Motor-Massenmatrix. Folgende Grenzwerte werden hierbei typischerweise berücksichtigt:

$$(2) \qquad |\tau_i| \leq \tau_{max,i}$$

$$(8) \qquad |\theta_i| \leq \theta_{max,i}$$

$$(9) \qquad |\dot{\theta}_i| \leq \dot{\theta}_{max,i}$$

$$(10) \qquad |\varphi_i| \leq \varphi_{max,i}$$

mit $i = 1, ..., n$. Hierbei ist $\varphi = \theta - q$ die Auslenkung der Gelenkverbindung. In diesem Robotermodell ist die motorseitige Dynamik linear, d.h. Motor- und Abtriebsdynamik sind nur über das elastische Drehmoment $\tau_J$ gekoppelt. Die Abtriebsdynamik im zweiten Modell hat die gleichen Eigenschaften wie der Roboter-Manipulator mit starren Gelenken.

Die Anfangs- und Endbedingungen zum Bremsen eines Roboter-Manipulators lauten:

$$(12) \qquad q(0) = q_0, \qquad q(t_f) = \text{frei, oder } q(t_f) = q_d(t_f)$$

$$(13) \qquad \dot{q}(0) = \dot{q}_0, \qquad \dot{q}(t_f) = 0$$

$$(14) \qquad \ddot{q}(0) = \ddot{q}_0, \qquad \ddot{q}(t_f) = 0$$

wobei $q(0), \dot{q}(0)$ und $\ddot{q}(0)$ die initiale Position, Geschwindigkeit und Beschleunigung des Abtriebs sind. Zur Endzeit $t_f$ sind die Geschwindigkeit und Beschleunigung Null, während die Position entweder undefiniert oder eine bestimmte Sollposition ist. Zusätzlich zu (12)-(14) gelten folgende Randbedingungen für Roboter-Manipulatoren mit elastischen Gelenken:

$$(15) \qquad \theta(0) = \theta_0, \qquad \theta(t_f) = K_J^{-1} g(q(t_f)) + q(t_f)$$

$$(16) \qquad \dot{\theta}(0) = \dot{\theta}_0, \qquad \dot{\theta}(t_f) = 0$$

$$(17) \qquad \ddot{\theta}(0) = \ddot{\theta}_0, \qquad \ddot{\theta}(t_f) = 0$$

Analog zum Abtrieb müssen die Motorbeschleunigung und Motorgeschwindigkeit Null werden, um einen Stillstand zu erreichen. Im Equilibrium muss das elastische Drehmoment im Gelenk das Gravitationsdrehmoment kompensieren, d.h. $\tau_J(t_f) = g(q(t_f))$. Dies resultiert in einer statischen Abweichung zwischen Motor- und Abtriebsposition.

Um die Bedingungen (12) bis (17) zu erfüllen, können verschiede Bremsregler verwendet werden. In der Regel haben diese zum Ziel, ein bestimmtes vorgegebenes Kriterium zu erfüllen. So kann das Bremsen unter anderem energie- oder zeitoptimal erfolgen, alternativ kann versucht werden, entlang einer Solltrajektorie zu bremsen. Für das Bremsen können ein oder mehrere Bremsregler zur Verfügung stehen.

Im Weiteren werden die Randbedingungen für das Bremsen eines Roboter-Manipulators erläutert, sowie mögliche Bremsregler vorgestellt, die diese Bedingungen erfüllen können.

Die Schätzung der Bremstrajektorie des Roboter-Manipulators (Bremswegprädiktion) besteht darin, die Trajektorie des Roboter-Manipulators vom Startzustand $\theta(0), \dot{\theta}(0), \ddot{\theta}(0), q(0), \dot{q}(0), \ddot{q}(0)$ bis zum Stillstand $\dot{\theta}(\hat{t}_f) = \dot{q}(\hat{t}_f) = 0, \ddot{\theta}(\hat{t}_f) = \ddot{q}(\hat{t}_f) = 0$ unter Einbezug der Dynamik des Roboter-Manipulators und des Reglers zu bestimmen. Die geschätzte finale Zeit wird $\hat{t}_f$ bezeichnet.

Um die Bremstrajektorie zu berechnen, kann die volle Dynamik des Roboter-Manipulators [Gleichung (1) für Roboter mit starren Gelenken oder Gleichungen (5)-(7) für Roboter mit elastischen Gelenken] vorwärtssimuliert werden.

EP 3 285 975 B1

Dies ist üblicherweise sehr rechenintensiv und kann bei hohen Regler-Abtastraten nicht in Echtzeit realisiert werden.

Es ist jedoch möglich, die Berechnung zu vereinfachen, indem Annahmen über das dynamische Systemverhalten getroffen werden. Da Gravitations- und Coriolisdrehmomente üblicherweise von der der Robotersteuerung kompensiert werden, können diese vereinfachend von der Berechnung ausgeschlossen werden. Für Roboter-Manipulatoren mit starren Gelenken (starrer Kinematik) kann so bspw. nur die Änderung der Massenmatrix $M(q)$ betrachtet werden. Weiterhin kann vereinfachend angenommen werden, dass sich die Dynamik während des Bremsvorgangs kaum ändert und somit als konstant angesehen werden. Diese Vereinfachungen führen dazu, dass sich die Genauigkeit der Prädiktion der Bremstrajektorie verschlechtert, die Prädiktion jedoch schneller berechnet und ggf. in Echtzeit implementiert werden kann.

Eine Simulation der Dynamik vom Startzustand bis zum Stillstand liefert den geschätzten Verlauf der Gelenkpositionen $\hat{q}_b(t) \in R^n$ und Gelenkgeschwindigkeiten $\hat{\dot{q}}_b(t) \in R^n$, wobei $t \in [t_0, t_f]$ ist. Durch Eigenwertzerlegung der Systemdynamik ist es möglich, die Bremstrajektorie nicht nur im Gelenkraum, sondern auch in modalen Koordinaten zu beschreiben.

Wird bspw. ein relevanter Punkt, bezeichnet POI (Point Of Interest), am Roboter-Manipulator betrachtet, ist es weiterhin möglich, mit Hilfe der Vorwärtskinematik des Roboter-Manipulators auch den zeitlichen Verlauf der kartesischen Position $\hat{x}_{b,POI}(t) \in R^3$ und Geschwindigkeit $\hat{\dot{x}}_{b,POI}(t) \in R^3$ dieses POI zu bestimmen. Kartesische, Gelenk- und modale Koordinaten können stets durch Transformation ineinander übergeführt werden.

Um aktiv Einfluss auf den Bremsweg des Roboter-Manipulators zu nehmen, um z.B. Kollisionen zu vermeiden, wird die Bremstrajektorie vorteilhaft auch dann berechnet (geschätzt), wenn sich der Roboter-Manipulator nominell verhält (bspw. einer Solltrajektorie folgt), kein Fehlerzustand auftritt, und vom Nutzer keine Aufforderung zum Stoppen erfolgt ist bzw. der eigentliche Bremsvorgang noch nicht initiiert worden ist. Wenn die Schätzung des Bremswegs regelmäßig berechnet wird, dann kann anhand verschiedener Kriterien, die nachfolgend beschrieben werden, das Bremsen automatisch initiiert und/oder Modifikationen am Bremsregler oder an der Soll-Bremstrajektorie vorgenommen werden.

Nachdem die Bremstrajektorie ausgehend vom Initialzustand des Roboter-Manipulators berechnet wurde, kann diese vorteilhaft für weitere Analysen und Maßnahmen der Robotersteuerung verwendet werden.

Beispielsweise sei ein Objekt (Gegenstand/Hindernis/Person/etc.) in einem Arbeitsraum des Roboter-Manipulators durch eine Menge $X_{obs}$ von kartesischen Punkten gegeben. Natürlich können auch andere Koordinatensysteme verwendet werden. Die Distanz des vorgenannten POIs des Roboter-Manipulators zu einem Gegenstand/Hindernis kann mit Hilfe der Funktion $d = min\_dist(x_{POI}, X_{obs})$ bestimmt werden, wobei $min\_dist$ z.B. mit dem GJK-Algorithmus [1] oder der Kinematic Continuous Collision Detection Library [2] realisiert werden kann. Es können natürlich auch mehrere POIs und mehrere Gegenstände/Hindernisse berücksichtigt werden.

Wenn die Bremstrajektorie bekannt ist, kann der kleinste Abstand zum Objekt während des Bremsvorgangs bestimmt werden, nämlich: $\hat{d}_{min} = min(min\_dist(x_{POI}(t), X_{obs}))$, $t \in [t_0, t_f]$. Der kleinstmögliche Abstand muss nicht notwendigerweise dann auftreten, wenn der Roboter-Manipulator zum Stillstand kommt, sondern kann entlang der Bremstrajektorie vorliegen. Wenn gilt: $\hat{d}_{min} > 0$, dann wird der Roboter-Manipulator voraussichtlich nicht mit dem Objekt kollidieren, während ein Kontakt für den Fall $\hat{d}_{min} \leq 0$ sehr wahrscheinlich ist.

Während des Bremsvorgangs kann es vorkommen, dass vorgegebene Beschränkungen BD* (Kennwerte KW*), wie bspw. die maximale Position oder Geschwindigkeit einer Gelenkverbindung $GEL_n$, verletzt werden. Grenzwertüberschreitungen sind in der Regel unerwünscht, da sie zu Schäden des Roboters führen und/oder den Bremsvorgang beeinträchtigen können. Mit Hilfe der geschätzten Bremstrajektorie ist es möglich, den Verlauf der Gelenks-/Motorpositionen und -geschwindigkeiten auf Grenzwertüberschreitungen vorausschauend zu prüfen. Für Roboter-Manipulatoren mit starren Gelenkverbindungen tritt eine Überschreitung auf, wenn gilt:

$$(18) \qquad | \hat{q}_{b,i}(t) | \geq q_{max,i}$$

$$(19) \qquad | \hat{\dot{q}}_{b,i}(t) | \geq \dot{q}_{max,i},$$

wobei $t \in [t_0, \hat{t}_f]$ und $i = 1, ..., n$ sind. Für Roboter-Manipulatoren mit elastischen Gelenkverbindungen tritt eine Grenzwertverletzung auf, wenn gilt:

$$(20) \qquad | \hat{\theta}_{b,i}(t) | \geq \theta_{max,i}$$

$$(21) \quad |\hat{\dot{\theta}}_{b,i}(t)| \geq \dot{\theta}_{\max,i}$$

$$(22) \quad |\hat{\dot{\varphi}}_{b,i}(t)| \geq \varphi_{\max,i}.$$

Mit Hilfe der Bremswegprädiktion ist es somit möglich, zu bestimmen, zu welchem Zeitpunkt und in welcher Höhe eine Grenzwertüberschreitung stattfinden wird.

Wenn die Bremswegprädiktion eine Kollision bspw. mit einer Person vorhersieht, d.h. $\hat{d}_{\min} \leq 0$, dann kann die Verletzungswahrscheinlichkeit der Person und/oder die Wahrscheinlichkeit, dass der Roboter Schaden nimmt, mit geeigneten Kollisionsmodellen oder anderen Repräsentationen/Indizes bestimmt werden, die Kollisionsparameter Verletzung/Schäden zuordnen.

Stehen mehrere Bremsregler zum Bremsen des Roboter-Manipulators zur Verfügung, so kann prädiziert werden, welcher Bremsregler ein bestimmtes vorgegebenes Kriterium am besten erfüllt. Hierfür muss die Bremstrajektorie für jeden Bremsregler berechnet werden. Beispielsweise kann analysiert werden, welches Verfahren zeitlich am schnellsten zum Halt des Roboter-Manipulators führt oder den geringsten Abstand zur Umgebung während des Bremsens einhalten kann.

Mit Hilfe der Bremswegprädiktion ist es somit möglich, den minimalen Abstand des Roboter-Manipulators zu einem Hindernis/Objekt während des Bremsvorgangs zu bestimmen. Dieses Wissen kann dazu genutzt werden, das Bremsen so zu initiieren, dass keine womöglich gefährliche Kollision auftritt oder zumindest die vom Roboter-Manipulator ausgehende Gefahr minimiert wird.

Um einen Kontakt zu vermeiden, muss der Bremsvorgang initiiert werden solange $\hat{d}_{\min} > 0$. Wenn die geschätzte Distanz kleiner oder gleich Null wird, dann wird der Roboter-Manipulator wahrscheinlich mit dem Hindernis/Objekt kollidieren. Die Robotersteuerung kann das Bremsen automatisch initiieren, sobald die minimale geschätzte Distanz einen Grenzwert $\varepsilon$ unterschreitet, d.h. $\hat{d}_{\min} < \varepsilon$ ist.

Falls aus der Berechnung der Bremstrajektorie resultiert, dass vorgegebene Grenzwerte verletzt werden, können die Reglerparameter, der Reglertyp oder eine Soll-Bremstrajektorie modifiziert werden, um eine bessere Einhaltung der Grenzwerte zu erzielen. Sofern Änderungen vorgenommen wurden, muss die Bremstrajektorie erneut geschätzt werden. Dieses Vorgehen kann sukzessive wiederholt werden, bis sämtliche Grenzwerte eingehalten werden. In manchen Fällen sind die Anfangsbedingungen beim Initiieren des Bremsvorgangs jedoch derart, dass mit begrenzten Steuergrößen eine Grenzwertüberschreitung nicht vermieden werden kann. Vorteilhaft wird bei der Planung der Robotertrajektorie darauf geachtet werden, dass der Roboter zu jeder Zeit bremsbar ist.

Unter Verwendung der Schätzung einer menschlichen Verletzungsschwere und/oder von Schäden am Roboter-Manipulator kann der Bremsvorgang derart initiiert werden, dass ein Kontakt auftritt ($\hat{d}_{\min} \leq 0$), eine bestimmte Verletzungs-/Schadensschwere jedoch nicht überschritten wird.

Das folgende Beispiel dient der weiteren Erläuterung der vorstehenden Ausführungen. In diesem Beispiel wird das Bremsen eines Roboter-Manipulators mit der Dynamik (1) und Grenzwerten (2)-(4) behandelt. Roboter-Manipulatoren mit elastischen Gelenken und entsprechender Dynamik (5)-(7) werden nicht betrachtet, da das prinzipielle Vorgehen das gleiche wie für Roboter-Manipulatoren mit starren Gelenken ist.

Ziel ist es, den Roboter-Manipulator so schnell wie möglich zum Stillstand zu bringen. Es wird dabei angenommen, dass sich eine Person im Arbeitsraum des Roboter-Manipulators aufhält, ohne sich zu bewegen. Die Position sowie die Umrisse der Person werden bspw. von einem 3D-Scanner oder einem 3D-Kamerasystem erfasst und für die Steuerung des Roboter-Manipulators bereitgestellt. Um die Distanz zwischen dem Roboter-Manipulator und der Person zu bestimmen, wird lediglich ein POI des Roboter-Manipulators betrachtet.

Beim Reglerentwurf wird angenommen, dass die Motordrehmomente entsprechend (2) beschränkt sind. Ein Teil des Maximaldrehmoments wird für die Gravitationskompensation aufgebracht. Die konfigurationsabhängigen Grenzen lauten:

$$(24) \quad \tau'_{m,i}(q) := -(\tau_{\max,i} + g_i(q)) < 0$$

$$(25) \quad \tau'_{M,i}(q) := \tau_{\max,i} - g_i(q) > 0$$

Der verbleibende Anteil des verfügbaren Drehmoments $\tau' = \tau - g(q)$ erfüllt die Bedingung:

$$(26) \quad \tau'_{m,i}(q) \leq \tau_i \leq \tau'_{M,i}(q), \ i = 1, \ldots, n.$$

Nachfolgend werden zwei Bremsregler vorgeschlagen. Ein Bremsregler, der in Gelenkkoordinaten q [5] und ein Bremsregler, der in modalen Koordinaten entworfen ist.

Die zeitliche Änderung der kinetischen Energie eines Roboter-Manipulators ist: $\dot{T} = \dot{q}\tau$. Folgendes Reglergesetz führt lokal zur größtmöglichen Abnahme von $T$:

$$(27) \qquad \tau_i = \begin{cases} \tau'_{m,i}(q) & wenn\ \dot{q}_i \geq 0 \\ \tau'_{M,i}(q) & wenn\ \dot{q}_i < 0 \end{cases} + g_i(q)$$

mit $i = 1, ..., n$. Um einen Kompromiss zwischen optimaler Lösung und einem gleichmäßigen Erreichen des Zielzustands $\dot{q}(t_f) = 0$, $\ddot{q}(t_f) = 0$ zu erzielen, kann eine Übergangsregion $2\varepsilon_i$ eingeführt werden, wie in (28) erfolgt.

$$(28) \qquad \tau_i = \begin{cases} \tau'_{m,i}(q) & wenn\ \dot{q}_i \geq 0 \\ \tau'_{m,i}(q)\dot{q}_i / \varepsilon_i & wenn\ \varepsilon_i > \dot{q}_i \geq 0 \\ \tau'_{M,i}(q)\dot{q}_i / \varepsilon_i & wenn\ -\varepsilon_i < \dot{q}_i \leq 0 \\ \tau'_{M,i}(q) & wenn\ \dot{q}_i \geq \varepsilon_i \dot{q}_i \leq -\varepsilon_i \end{cases} + g_i(q)$$

Der Einfachheit halber wird nachfolgend nur das Reglergesetz (27) betrachtet. Da Coriolisdrehmomente vorhanden sind, ist das effektive Drehmoment, das die Masse des Roboter-Manipulators beschleunigt:

$$(29) \qquad \tilde{\tau} = \tau - g(q) - C(q,\dot{q})\dot{q}.$$

Wenn der lokal optimale Bremsregler verwendet wird, erhält man:

$$(30) \qquad \tilde{\tau}_i = -sign(\dot{q}_i)\tau_{max,i} - g_i(q) - \{C(q,\dot{q})\dot{q}\}_i$$

mit $i = 1, ..., n$.

Mit Hilfe von (29) kann die Dynamik des Roboter-Manipulators (1) folgendermaßen formuliert werden:

$$(31) \qquad M(q)\ddot{q} = \tilde{\tau}$$

Durch Lösen des verallgemeinerten Eigenwertproblems kann (31) in einen entkoppelten Raum transformiert werden. Aufgrund der symmetrischen, positiv definiten Massenmatrix $M(q)$ kann eine orthonormale Matrix $V \in R^{n \times n}$ gefunden werden, so dass folgender Zusammenhang gilt:

$$(32) \qquad MV = VM_V$$

Hierbei ist $M_V = diag\{m_{V,i}\}$, $i = 1, ..., n$ eine diagonale Matrix, die die System-Eigenwerte enthält. Unter der Verwendung von $V$ können die Abtriebspositionen, -geschwindigkeiten und -beschleunigungen sowie das effektive Drehmoment in modale Koordinaten transformiert werden.

$$(33) \qquad q_V = V^T q$$

$$(34) \qquad \dot{q}_V = V^T \dot{q}$$

$$(35) \qquad \ddot{q}_V = V^T \ddot{q}$$

$$(36) \qquad \tilde{\tau}_V = V^T \tilde{\tau}$$

Hiermit erhält man n voneinander unabhängige Doppelintegratoren

$$(37) \qquad m_{V,i}\ddot{q}_{V,i} = \tilde{\tau}_{V,i}, i = 1, ..., n$$

Um das Reglergesetz (27) in modalen Koordinaten umzusetzen, müssen die Steuerungsgrenzen, d.h. die Motordrehmomente, ebenfalls in den entkoppelten Raum transformiert werden. Der Raum, der durch die Motordrehmomente aufgespannt wird, kann durch den Hyperquader

$$\Omega := [\tau'_{m,1}, \tau'_{M,1}] \times ... \times [\tau'_{m,n}, \tau'_{M,n}]$$

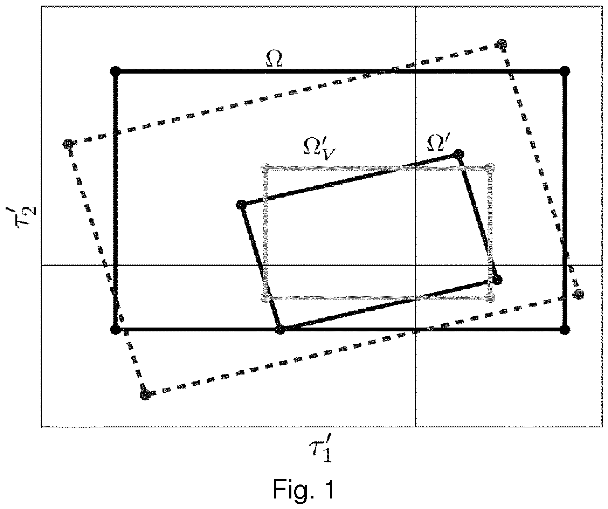

mit den entsprechenden Eckpunkten $v_i = [v_i(1),...,v_i(n)]^T$, $i = 1, ..., 2n$ beschrieben werden, siehe Fig. 1. Die transformierten Grenzen sind definiert als

$$\Omega_V := V^T(\Omega)$$

was bedeutet, dass jede Strecke von $\Omega$ transformiert wird. Die Transformation ist linear, für $\det[\Omega]^T = 1$ wird der Hyperquader um den Ursprung gedreht, während für $\det[\Omega]^T = -1$ eine Spiegelung stattfindet.

Nachdem die Motordrehmomente in den entkoppelten Raum transformiert wurden, sind die Maximal- und Minimalwerte jeder Gelenkverbindung bzw. modalen Koordinate nicht mehr unabhängig voneinander. Dieses Verhalten kann anhand des Rechtecks mit den gestrichelten Seiten in **Fig. 1** nachvollzogen werden. In diesem Beispiel wird ein Manipulator mit zwei Antrieben betrachtet, z.B. ein Doppelpendel. Folglich ist zu beobachten, dass die Entkopplung der Dynamik zu einer Kopplung der Motordrehmomente führt. Es wäre möglich, ein Optimal-Control-Problem zu formulieren, in dem die Kopplung der Motor-Drehmomente berücksichtigt wird. Hier ist das Ziel jedoch, die Entkopplung des Systems aufrechtzuerhalten. Daher wird nach einem Hyperquader $\Omega'_V$ gesucht, bei dem jede modale Koordinate unabhängige Minimal- und Maximalwerte hat. Eine Bedingung für diesen Hyperquader $\Omega'_V$ ist, dass dieser vollständig in den originalen Grenzen $\Omega$ liegen muss, wenn er in den Originalraum zurück transformiert wird ($\Omega'$).

Es ist möglich, den größtmöglichen Hyperquader $\Omega'_V$ zu finden. Hier soll das Verhältnis von minimaler und maximaler Stellgröße jeder Gelenkverbindung auch in modalen Koordinaten erhalten bleiben, weshalb die originalen Drehmomente uniform skaliert werden, siehe **Fig. 1**.

Der benötigte Skalierungsfaktor k kann mit Hilfe des nachfolgend angeführten Algorithmus 1 bestimmt werden. Die maximalen und minimalen Gelenk-Drehmomente sind

$$\tau'_M := [\tau'_{M,i}, ..., \tau'_{M,n}]^T \text{ und } \tau'_m := [\tau'_{m,i}, ..., \tau'_{m,n}]^T.$$

<u>Algorithmus 1</u>:

$$k \leftarrow 1$$

$$for \quad i = 1 \, to \, 2^n \, do$$

$$v_{i,V} \leftarrow V v_i$$

$$d_i \leftarrow |v_{i,\tilde{V}}| - |v_i|$$

$$j \leftarrow \arg\max d_i(j)$$

$$if \ \left|v_{i,\tilde{v}}(j)\right| > \left|v_i(j)\right| then$$

$$k \leftarrow \min\left\{k, \frac{v_i(j)}{v_{i,\tilde{v}}(j)}\right\}$$

$$end \ if$$

$$end \ for$$

$$\tau'_{V,M} \leftarrow k\tau'_M$$

$$\tau'_{V,m} \leftarrow k\tau'_m$$

Die Grenzwerte des Steuerungseingangs im entkoppelten Raum lauten nun

$$(40) \qquad \tau'_{V,m} \leq \tau'_{V,i} \leq \tau'_{V,M}$$

Analog zu (27) lautet das Reglergesetz zum Bremsen jeder modalen Koordinate

$$(41) \qquad \tau'_{V,i} = \begin{cases} \tau'_{V,m,i} & wenn \ \dot{q}_{V,i} \geq 0 \\ \tau'_{V,M,i} & wenn \ \dot{q}_{V,i} < 0 \end{cases}$$

mit $i = 1, ..., n$. Der Steuereingang im Gelenkraum kann schlussendlich durch Rücktransformation mit Verhalten werden:

$$(42) \qquad \tau = V\tau'_V + g(q).$$

In Bezug auf die benötigte Bremsendauer ist Bremsregler (42) weniger performant als Bremsregler (27), da die verfügbaren Motordrehmomente reduziert werden müssen, um die Entkopplung von Dynamik und Steuerbereich umzusetzen.

Nachfolgend wird der entkopplungsbasierte Bremsregler (42) verwendet, um den Roboter zu bremsen. Es folgt nun die Berechnung (Schätzung) der Bremstrajektorie. Zuerst wird die Prädiktion der Bremstrajektorie unter Verwendung des entkopplungsbasierten Reglers betrachtet. Danach wird beschrieben, wie diese Ergebnisse verwendet werden können, wenn der gelenkbasierten Bremsregler (27) eingesetzt wird.

Es wird angenommen, dass Coriolis-Drehmomente vernachlässigbar sind oder exakt kompensiert wurden. Da sich die Gelenkwinkel $q$ während des Bremsvorgangs nur wenig ändern, wird weiterhin angenommen, dass die Massenmatrix konstant ist. Die Dynamik in modalen Koordinaten ist durch:

$$(43) \qquad m_{V,i}\ddot{q}_{V,i} = \tau'_{V,i}, \ i = 1, ..., n$$

gegeben. Das Bremsen eines Doppelintegrators erfordert nur einen Motorzyklus, d.h. der Motor muss das Drehmoment nicht reversieren. Durch Lösen der Dynamik (43) für einen konstanten Steuereingang erhält man:

$$(44) \qquad \hat{q}_{V,i}(t) = q_{V,0,i} + \dot{q}_{V,0,i} + \frac{1}{2}\frac{\tau'_{V,i}}{m_{V,i}}t^2$$

$$(45) \qquad \hat{\dot{q}}_{V,i}(t) = \dot{q}_{V,0,i} + \frac{\tau'_{V,i}}{m_{V,i}}t$$

mit $i = 1,...,n$. Setzt man $\hat{\dot{q}}_{V,i}(t) = 0$ und löst diese Gleichung nach der Zeit, dann erhält man die finale Zeit und zugehörige Endposition:

$$(46) \qquad \hat{t}_{f,i} = -m_{V,i}\frac{\dot{q}_{V,0,i}}{\tau'_{V,i}} + t_0$$

$$(47) \qquad \hat{q}_{V,i}(\hat{t}_{f,i}) = q_{V,0,i} - \frac{1}{2}\frac{m_{V,i}q_{V,0,i}^2}{\tau'_{V,i}}$$

Wenn eine modale Koordinate Stillstand erreicht hat, muss man $\tau'_{V,i}(t > \hat{t}_{f,i}) = 0$ wählen und erhält folglich:

$$(48) \qquad \hat{q}_{V,i}(t > \hat{t}_{f,i}) = \hat{q}_{V,i}(\hat{t}_{f,i})$$

$$(49) \qquad \hat{\dot{q}}(t > \hat{t}_{f,i}) = 0$$

Die Bremsdauer des gesamten Roboter-Manipulators ist generell die größte finale Zeit aller Koordinaten:

$$(50) \qquad \hat{t}_f = \max(\hat{t}_{f,i}), i = 1,...,n$$

Mit Hilfe der geschätzten Bremsdauer und (44)-(45) kann nun eine diskretisierte Bremstrajektorie bestimmt werden. Hierfür wird der Zeitvektor $t_b$ definiert, der aus $n_b$ Stützpunkten besteht.

$$(51) \qquad t_{b,0} = t_0$$

$$(52) \qquad t_{b,j+1} = t_{b,j} + \frac{\hat{t}_f}{n-1}, j = 1,...,n_b - 1$$

Die entkoppelten Positionen und Geschwindigkeiten (44) und (45) können nun für jeden Zeitpunkt $t_{b,j}$ bestimmt werden. Die volle Bremstrajektorie kann durch folgende Matrizen repräsentiert werden.

$$(53) \qquad \hat{Q}_{bV} = \begin{bmatrix} \hat{q}_{bV,1,1} & \cdots & \hat{q}_{bV,1,n_b} \\ \vdots & \ddots & \vdots \\ \hat{q}_{bV,n,1} & \cdots & \hat{q}_{bV,n,n_b} \end{bmatrix} = \begin{bmatrix} \hat{q}_{bV,1},...,\hat{q}_{bV,n_b} \end{bmatrix}$$

$$(54) \qquad \hat{\dot{Q}}_{bV} = \begin{bmatrix} \hat{\dot{q}}_{bV,1,1} & \cdots & \hat{\dot{q}}_{bV,1,n_b} \\ \vdots & \ddots & \vdots \\ \hat{\dot{q}}_{bV,n,1} & \cdots & \hat{\dot{q}}_{bV,n,n_b} \end{bmatrix} = \begin{bmatrix} \hat{\dot{q}}_{bV,1},...,\hat{\dot{q}}_{bV,n_b} \end{bmatrix}$$

Die Bremstrajektorie im Gelenkraum kann durch die Rücktransformation über $V$ erhalten werden.

$$(55) \qquad \hat{Q}_b = \begin{bmatrix} q_{bV,1},...,q_{bV,n_b} \end{bmatrix} = \begin{bmatrix} V\hat{q}_{bV,1},...,V\hat{q}_{bV,n_b} \end{bmatrix}$$

$$(56) \qquad \hat{\dot{Q}}_b = \left[\hat{\dot{q}}_{bV,1},...,\hat{\dot{q}}_{bV,n_b}\right] = \left[V\hat{\dot{q}}_{bV,1},...,V\hat{\dot{q}}_{bV,n_b}\right]$$

Eine Diskretisierung der Bremstrajektorie muss nicht notwendigerweise erfolgen. Für die Analysen können beispielsweise Optimierungsverfahren eingesetzt werden, die (44) und (45) direkt nutzen.

Wenn der gelenkbasierte Regler (27) verwendet wird, um den Roboter-Manipulator zu bremsen, dann kann die Bremswegprädiktion wie folgt berechnet werden. Um eine echtzeitfähige Berechnung zu realisieren, werden vorteilhaft folgende Vereinfachungen getroffen:

- da sich die Gelenkwinkel $q$ nur geringfügig während des Bremsens ändern, wird M(q) = const und g(q) = const angenommen.
- es wird weiterhin angenommen, dass die Coriolisdrehmomente konstant sind oder von der Steuerung exakt kompensiert werden.

Es ist möglich, die Systemdynamik im Gelenkraum ausgehend vom Startzustand bis zum Stillstand zu lösen, um die Bremstrajektorie zu erhalten. Weiterhin ist es möglich, die Bremstrajektorie im entkoppelten Raum (32)-(37) zu bestimmen. Beim Berechnen der modalen Positionen und Geschwindigkeiten muss auf das Vorzeichen von $\tau'_{V,i}$ geachtet werden. Während beim entkopplungsbasierten Regler (42) das Vorzeichen des Drehmoments bis zum Stillstand gleich bleibt, kann das Vorzeichen des Drehmoments im Gelenkraum während des Bremsvorgangs aufgrund der Kopplung der Systemdynamik wechseln. Deshalb müssen Vorzeichenwechsel von $\dot{q}$ und $\tau$ detektiert werden und in (33)-(37) und (44)-(45) einfließen.

Der Einfachheit halber wird nachfolgend nur ein POI des Roboter-Manipulators betrachtet, dem eine kartesische Position $x_{POI}$ zugewiesen ist. Die stillstehende Person wird durch eine Punktmenge $X_h$ repräsentiert. Unter Verwendung der Vorwärtskinematik des Roboter-Manipulators und der geschätzten Bremstrajektorie (55) kann der zeitliche Verlauf der POI-Position $\hat{x}_{POI,j}$ bestimmt werden, sowie der Abstand $\hat{d}_j = \min\_dist(\hat{x}_{POI,j}, X_h)$, j = 1, ..., $n_b$ des Roboter-Manipulators zum Menschen. Die kleinstmögliche geschätzte Distanz ist $\hat{d}_{min} = \min(\hat{d})$. Anstatt die diskretisierte Bremstrajektorie auszuwerten, können alternativ Optimierungsverfahren (z.B. Gradientenverfahren) eingesetzt werden, um die minimale Distanz in kürzerer Rechenzeit zu bestimmen.

Um zu bestimmen, ob eine Geschwindigkeits- oder Positionsbeschränkung überschritten wird, muss geprüft werden, ob (3) und (4) während des Bremsvorgangs eingehalten werden. Da der Entkopplungsansatz für Bremsregler und Bremswegprädiktion gewählt wurde, werden die modalen Positionen und Geschwindigkeiten in den Gelenkraum transformiert. (44) und (45) lauten in Vektorschreibweise:

$$(57) \qquad \hat{q}_V(t) = q_{V,0} + \dot{q}_{V,0}t + \frac{1}{2}b_V t^2$$

$$(58) \qquad \hat{\dot{q}}_V(t) = \dot{q}_{V,0} + b_V t$$

mit $b_V = \left[\dfrac{\tau'_{V,1}}{m_{V,1}},...,\dfrac{\tau'_{V,n}}{m_{V,n}}\right]^T$. Durch Rücktransformation über $V$ erhält man

$$(59) \qquad \hat{q}(t) = q_0 + \dot{q}_0 t + \frac{1}{2}b t^2$$

$$(60) \qquad \hat{\dot{q}}(t) = \dot{q}_V + b t$$

mit $b=Vb_V$. Um den Zeitpunkt einer Grenzwertüberschreitung zu bestimmen, wird $\hat{\dot{q}}_i(t) = \pm q_{max,i}$, mit i = 1, ..., n gesetzt und nach der Zeit gelöst.

$$(61) \qquad \hat{t}_{1/2,i} = -\frac{\dot{q}_{0,i}}{b_i} \pm \sqrt{\frac{\dot{q}_{0,i}^2}{b_i^2} - 2\frac{q_{0,i} + q_{\max,i}}{b_i}}$$

$$(62) \qquad \hat{t}_{3/4,i} = -\frac{\dot{q}_{0,i}}{b_i} \pm \sqrt{\frac{\dot{q}_{0,i}^2}{b_i^2} - 2\frac{q_{0,i} + q_{\max,i}}{b_i}}$$

Für Geschwindigkeiten wird $\hat{\ddot{q}}_i(t) = \pm \dot{q}_{\max,i}$ , mit i = 1, ..., n gesetzt, wodurch man

$$(63) \qquad \hat{t}_{5/6,i} = \frac{\pm \dot{q}_{\max,i} - \dot{q}_{0,i}}{b_i}$$

erhält. Im entkoppelten Raum können die einzelnen Koordinaten zu unterschiedlichen Zeitpunkten zum Stillstand kommen. Daher müssen bis zu n Zeitintervalle bei der Berechnung von (61)-(63) berücksichtigt werden. Wenn die Koordinate mit Index *i* zum Stillstand kommt, wird $\tau_{V,i}' = 0$ beim Regler gewählt. Um den Zeitpunkt einer Grenzwertverletzung für das nächste Intervall zu bestimmen - sofern keine im vorigen festgestellt wurde - müssen $b, q_0, \dot{q}_0$ neu initialisiert werden, um in (61)-(63) eingesetzt zu werden. Eine Grenzwertüberschreitung tritt auf, wenn $\hat{t}_{1/2,i}$, $\hat{t}_{3/4,i}$, oder $\hat{t}_{5/6,i}$ kleiner als die finale Zeit $\hat{t}_{f,i}$ des aktuellen Intervalls ist.

Alternativ kann iterativ in der diskretisierten Bremstrajektorie (53)-(54) nach Grenzwertverletzungen gesucht werden:

$$(64) \qquad \left|\hat{q}_{b,i,j}\right| \geq q_{\max,i}$$

$$(64) \qquad \left|\hat{\dot{q}}_{b,i,j}\right| \geq \dot{q}_{\max,i}$$

mit i = 1, ..., n und j = 1, ..., $n_b$.

Im folgenden Beispiel wird angegeben, wie die Verletzungswahrscheinlichkeit eines Menschen bei einer Kollision mit dem Roboter-Manipulator anhand der Ergebnisse und Methoden aus [3] bestimmt werden kann. Sei $\hat{t}_{imp}$ der geschätzte Zeitpunkt einer Kollision.

Man kann die reflektierte kartesische Masse $\hat{m}_{POI}(\hat{t}_{imp})$ und Geschwindigkeit $\hat{\dot{x}}_{POI}(\hat{t}_{imp})$ des POI in Richtung *u* bestimmen [4]. Mit Hilfe dieser Größen und der Oberflächengeometrie des POI kann die maximal zulässige, biomechanisch sichere POI-Geschwindigkeit in Richtung *u* berechnet werden, indem die lineare Sicherheitskurve:

$$(22) \qquad \hat{\dot{x}}_{POI,\max}(\hat{t}_{imp}) = c_1 \hat{m}_{POI}(\hat{t}_{imp}) + c_2$$

ausgewertet wird, wobei $\hat{\dot{x}}_{POI,\max}(\hat{t}_{imp})$ die maximal zulässige Geschwindigkeit ist. Die Parameter $c_1$, $c_2$ resultieren aus Kollisionsexperimenten. Wenn gilt: $\hat{\dot{x}}_{POI,\max}(\hat{t}_{imp}) \geq \hat{\dot{x}}_{POI}(\hat{t}_{imp})$ , dann wird die gewählte Verletzungsschwere höchstwahrscheinlich überschritten.

Nachfolgend werden zwei Algorithmen (Algorithmus 2 und Algorithmus 3) zur Schätzung und Analyse der Bremstrajektorie beschrieben, die auf dem entkopplungsbasierten Regler (42) aufbauen. Algorithmus 2 überprüft die Bremstrajektorie ausschließlich hinsichtlich einer Überschreitung von Grenzwerten während in Algorithmus 3 die volle, diskretisierte Bremstrajektorie bestimmt und auf Grenzwertverletzungen und potentiell gefährliche Kollisionen untersucht wird.

Im Algorithmus 2 werden zunächst die Grenzen des verfügbaren Motordrehmoments $\tau'$ im Gelenkraum be-

stimmt. Dann werden Gelenkpositionen, -geschwindigkeiten, und -drehmomente in den entkoppelten Raum transformiert. Nachdem der lokal optimale Steuereingang und die finale Bremsdauer für jede modale Koordinate bestimmt wurden, werden die Bremszeiten in aufsteigender Reihenfolge s sortiert. Für $i = 1..n$ Intervalle werden dann die Zeitpunkte möglicher Grenzwertüberschreitungen für jede Koordinate mit Index $j = 1...n$ berechnet. Wenn ein berechneter Zeitpunkt kleiner als die Endzeit des aktuellen Intervalls ist, dann wird ein Grenzwert voraussichtlich überschritten. Falls im jeweiligen Intervall keine Grenzwertüberschreitung festgestellt wurde, werden die Anfangswerte für Positionen, Geschwindigkeiten und Drehmomente für das nächste Intervall neu initialisiert.

<u>Algorithmus 2</u>:

$$t_{vio} \leftarrow 0$$

{Verfügbares Drehmoment für Bremsregler im Gelenkraum}

$$\tau'_{m,i}(q) := -(\tau_{\max} + g(q))$$

$$\tau'_{M,i}(q) := \tau_{\max} - g(q)$$

{Entkopplung Dynamik}

$$[M_V, V] = eigenwertzerlegung(M(q))$$

$$q_{V,0} = V^T q$$

$$\dot{q}_{V,0} = V^T \dot{q}$$

{Entkopplung Motordrehmomente}

$$[\tau'_{V,m}, \tau'_{V,M}] = \text{Algorithmus 1}(\tau_m(q), \tau_M(q), V)$$

{Optimales Drehmoment, Schätzung finale Zeit}

*for i= 1 to n do*

$$\tau'_{V,i} = \begin{cases} \tau'_{V,m,i} \; wenn \; \dot{q}_{V,i} \geq 0 \\ \tau'_{V,M,i} \; wenn \; \dot{q}_{V,i} < 0 \end{cases}$$

$$\hat{t}_{f,i} = -m_{V,i}\frac{\dot{q}_{V,0,i}}{\tau'_{V,i}} + t_0$$

*end for*

{Sortieren der Endzeiten einzelner modaler Koordinaten}

$$\left[\hat{t}_{f,s},s\right] = steigend\_sortieren\,(\hat{t}_f)$$

{$i = 1,...,n$ Zeitpunkte}
*for $i = 1$ to $n$ do*

  {$j = 1,...,n$ Koordinaten}
  *for $j = 1$ to $n$ do*

    {Zeitpunkte Überschreitung Positionsgrenzwert}

$$\hat{t}_{1/2,i} = -\frac{\dot{q}_{0,i}}{b_i} \pm \sqrt{\frac{\dot{q}_{0,i}^2}{b_i^2} - 2\frac{q_{0,i}+q_{max,i}}{b_i}}$$

$$\hat{t}_{3/4,i} = -\frac{\dot{q}_{0,i}}{b_i} \pm \sqrt{\frac{\dot{q}_{0,i}^2}{b_i^2} - 2\frac{q_{0,i}+q_{max,i}}{b_i}}$$

    {Zeitpunkte Überschreitung Geschwindigkeitsgrenzwert}

$$\hat{t}_{5/6,i} = \frac{\pm\dot{q}_{max,i}-\dot{q}_{0,i}}{b_i}$$

$$\hat{t}_{min,j} = \min(finde(\hat{t}_j > 0)) + \hat{t}_{fs,i}$$

    *if $\hat{t}_{min,j} \le \hat{t}_{fs,i+1}$ then*

$$\hat{t}_{Vi0,j} = \hat{t}_{min,j}$$

    *end if*
  *end for*

{Erster Zeitpunkt einer Grenzwertüberschreitung}

$$\hat{t}_{vio,min} = \min(\hat{t}_{vio})$$

*if $\hat{t}_{vio,min} > 0$ then*

   <u>return</u>
*end if*

{Initialisierung Anfangsbedingungen für neues Intervall}
*for $k = i$ to $n$ do*

$$q_{V,0,s_k} = q_{V,0,s_k} + \dot{q}_{V,0,s_k}(\hat{t}_{fs,i-1}-\hat{t}_{fs,i}) + \frac{1}{2}b_{V,s_k}(\hat{t}_{fs,i+1}-\hat{t}_{fs,i})^2$$

$$\dot{q}_{V,0,s_k} = \dot{q}_{V,0,s_k} + b_{V,s_k}(\hat{t}_{fs,i+1}-\hat{t}_{fs,i})$$

*end for*

$$q_0 = V q_{V,0}$$

$$\dot{q}_0 = V \dot{q}_{V,0}$$

$$\tau_{V,sj} = 0$$

$$b_V = \left[ \frac{\tau'_{V,1}}{m_{V,1}}, \ldots, \frac{\tau'_{V,n}}{m_{V,n}} \right]^T$$

$$B = V b_V$$

*end for*

Im Algorithmus 3 werden der Steuereingang und die Bremsdauer jeder modalen Koordinate wie in Algorithmus 2 bestimmt. Danach wird die Bremsdauer und finale Position $\hat{q}(\hat{t}_f)$ des gesamten Roboter-Manipulators bestimmt. Nach Definition des Zeitvektors $t_b$ werden die modalen Positionen und Geschwindigkeiten der diskretisierten Bremstrajektorie bestimmt. In jedem Zeitschritt wird überprüft, ob eine Grenzwertüberschreitung vorliegt und die Distanz zum Menschen geschätzt. Im Falle einer Kollision wird analysiert, ob diese zu einer Verletzung der Person führt. Schlussendlich wird die kleinstmögliche Distanz bestimmt, die zwischen Mensch und Roboter während der Bremstrajektorie auftritt.

Algorithmus 3:

*verletzung_position* ← *falsch*

*verletzung_geschwindigkeit* ← *falsch*

*gefährliche_kollision* ← *falsch*

$n_b$ ← *Anzahl Stützpunkte Bremstrajektorie*

{Verfügbares Drehmoment für Bremsregler im Gelenkraum}

$$\tau'_{m,i}(q) := -(\tau_{max} + g(q))$$

$$\tau'_{M,i}(q) := \tau_{max} - g(q)$$

{Entkopplung Dynamik}

$$[M_V, V] = eigenwertzerlegung(M(q))$$

$$\hat{q}_{bV,0} = V^T q$$

$$\hat{\dot{q}}_{bV,0} = V^T \dot{q}$$

{Optimales Drehmoment, Schätzung finale Zeit und Position}

*for i = 1 to n do*

$$\tau'_{V,i} = \begin{cases} \tau'_{V,m,i} & wenn \ \dot{q}_{bV,i} \geq 0 \\ \tau'_{V,M,i} & wenn \ \dot{q}_{bV,i} < 0 \end{cases}$$

$$\hat{t}_{f,i} = -m_{V,i} \frac{\dot{q}_{bV,0,i}}{\tau'_{V,i}} + t_0$$

$$\hat{q}_{V,i}(\hat{t}_{f,i}) = q_{V,0,i} - \frac{1}{2} \frac{m_{V,i} \dot{q}^2_{bV,0,i}}{\tau'_{V,i}}$$

*end for*

{Bremsdauer und finale Position des gesamten Roboters}

$$\hat{t}_f = \max(\hat{t}_{f,i}) \, , \ i = 1,..., n$$

$$\hat{q}(\hat{t}_f) = V \hat{q}_V(\hat{t}_f)$$

{Zeitvektor für Bremstrajektorie}

$$t_{b,0} = t_0$$

$$t_{b,j+1} = t_{b,j} + \frac{t_f}{n-1} \, , j = 1,...,n_b\text{-}1$$

{Berechnung und Analyse der Bremstrajektorie}
*for j = 1 to $n_b$ do*
  *for i = 1 to n do*
    *if $t_{b,j} > t_{f,i}$ then*

$$\hat{q}_{bV,i,j} = \hat{q}_{V,i}(\hat{t}_{f,i})$$

$$\hat{\dot{q}}_{bV,i,j} = 0$$

    *else*

$$\hat{q}_{bV,i,j} = q_{bV,0,i} + \dot{q}_{bV,0,i} t_{b,j} + \frac{1}{2} \frac{\tau'_{V,i}}{m_{V,i}} t^2_{b,j}$$

$$\hat{\dot{q}}_{bV,i,j} = \dot{q}_{bV,=,i} + \frac{\tau'_{V,i}}{m_{V,i}} t_{b,j}$$

    *end if*
  *end for*
{Aktuelle Position und Geschwindigkeit im Gelenkraum}

$$\hat{q}_{b,j} = V \hat{q}_{bV,j}$$

$$\hat{\dot{q}}_{b,j} = V \hat{\dot{q}}_{bV,j}$$

{Prüfen, ob Positions- oder Geschwindigkeitsgrenzwert verletzt}

$$if \left| \hat{q}_{b,i,j} \right| \geq q_{\max,i} \quad then$$

  *verletzung_position = wahr*
  *end if*

$$if \quad \left|\hat{\dot{q}}_{b,i,j}\right| \geq \dot{q}_{\max,i} \; then$$

$$verletzung\_geschwindigkeit = wahr$$

$$end \; if$$

{Aktueller Abstand zu Person}

$$\hat{d}_j = \min\_dist(\hat{x}_{POI,j}, X_h)$$

{Prüfen, ob Kollision zulässige Verletzungsschwere überschreitet}

$$if \quad \hat{d}_j \leq 0 \; then$$

$$\hat{m}_{POI,j} = reflektierte\_masse(\hat{q}_{b,j}, M(\hat{q}_{b,j}), u)$$

$$\hat{\dot{x}}_{POI,j} = kartesische\_geschwindigkeit(\hat{q}_{b,j}, \hat{\dot{q}}_{b,j}, u)$$

$$\hat{\dot{x}}_{POI,j,\max} = c_1 \hat{m}_{POI,j} + c_2$$

$$if \; \hat{\dot{x}}_{POI,j} \geq \hat{\dot{x}}_{POI,j,\max} \quad then$$

$$gefährliche\_kollision = wahr$$

$$end \; if$$

$$end \; if$$

$$end \; for$$

{Kleinster Abstand zu Person während Bremsvorgang}

$$\hat{d}_{\min} = \min(\hat{d})$$

Die vorstehend verwendeten Bezüge in eckigen Klammern beziehen sich auf folgende Literatur:

[1] E. G. Gilbert, D. W. Johnson und S. S. Keerthi, "A fast procedure for computing the distance between complex objects in three-dimensional space", IEEE Journal of Robotics and Automation, vol. 4, no. 2, pp. 193-203, 1998.

[2] U. Frese und H. Täubig: "A new library for real-time continuous collision detection", Proceedings of 7th German Conference on Robotics (ROBOTIK2012), pp. 1-5, VDE, 2012.

[3] S. Haddadin, S. Haddadin, A. Khoury, T. Rokahr, S. Parusel, R. Burgkart, A. Bicchi, und A. Albu-Schäffer, "On making robots understand safety: Embedding injury knowledge into control," International Journal of Robotics, 2012.

[4] O. Khatib, "Inertial properties in robotic manipulation: an object-level framework," Int. Journal of Robotics Research, vol. 14, no. 1, pp. 19-36, 1995.

[5] A. De Luca, A. Albu-Schäffer, S. Haddadin, und G. Hirzinger, "Collision detection and safe reaction with the DLR-III lightweight manipulator arm," in IEEE/RSJ Int. Conf. on Intelligent Robots and Systems (IROS2006), Beijing, China, 2006, pp. 1623-1630.

Vorteile und bevorzugte Ausgestaltungen der Vorrichtung ergeben sich durch eine sinngemäße und analoge Übertragung der vorstehend zu dem vorgeschlagenen Verfahren gemachten Ausführungen.

Es zeigen:

Fig.1    Darstellung eines Steuerbereichs mit unabhängigen Grenzwerten im entkoppelten Raum durch Skalierung der originalen Motordrehmomente,

Fig. 2    einen schematisierten Verfahrensablauf eines Ausführungsbeispiel des vorgeschlagenen Verfahrens, und

Fig. 3    einen schematisierten Aufbau eines Ausführungsbeispiels einer vorgeschlagenen Regelvorrichtung.

**Fig.1** zeigt eine Darstellung eines Steuerbereichs mit unabhängigen Grenzwerten im entkoppelten Raum durch Skalierung der originalen Motordrehmomente eines Roboter-Manipulators.

Das vorgeschlagene Verfahren wird vorliegend konkret angewendet, um einen in Bewegung befindlichen Roboter-Manipulator in minimaler Zeit in einen Ruhezustand, d.h. einen Zustand ohne Bewegung abzubremsen. Die Dynamik des Roboter-Manipulators sei dabei durch folgendes System gekoppelter Bewegungsgleichungen $BG_G$ beschrieben:

$$(37) \quad \theta = \int \dot{\theta} \, dt + \theta_0$$

$$(38) \quad M(q)\ddot{q} = K_J(\theta - q)$$

mit $\theta_0 \in R^n$ als die N Motorpositionen zum Zeitpunkt des Beginns der Abbremsung.

Im Allgemeinen kann das Gleichungssystem (37) - (38) aufgrund der Koppelung über Massen- bzw. Trägheitsmatrix M(q) nicht analytisch gelöst werden. Eine numerische Lösung des Gleichungssystems (37) - (38) ist für eine Echtzeitsteuerung zu rechenzeitintensiv. Das vorgeschlagene Verfahren ermöglicht hingegen eine hinreichend genaue Ermittlung der Stellgrößen. Mit dem vorgeschlagenen Verfahren ist es zudem möglich, die Bremstrajektorie jeder Gelenkverbindung des Roboter-Manipulators und die erforderliche Bremszeit in Echtzeit zu ermitteln.

Um das vorliegende Optimalsteuerproblem zu lösen, wird die Dynamik Gl. (37) - (38) zunächst mittels Eigenwerten entkoppelt. Hierzu sei die Massenmatrix M(q) symmetrisch und positiv definit. Weiterhin sei die Steifigkeitsmatrix $K_J$ positiv definit, so dass eine orthonormale Matrix $V \in R^{n \times n}$ gefunden werden kann, für die gilt:

$$(39) \quad MV = KVM_V,$$

wobei $M_Q$ eine Diagonalmatrix ist. Bei Verwendung von neuen entkoppelten Koordinaten $\theta_Q = V^{-1}\theta$ und $q_Q = V^{-1}q$ erhält man N unabhängige SISO-Federsysteme (SISO engl. für "Single Input Single Output"):

$$(40) \quad M_V \ddot{q}_V = \theta_V - q_V \, .$$

Wesentlich ist weiterhin, dass die Beschränkungen der Stellgrößen $u_m(t)$ ebenfalls in das entkoppelte System transformiert werden müssen. Die Beschränkungen der Stellgrößen $u_m(t)$ seien vorliegend gegeben durch $u_{m,min}$ und $u_{m,max}$. Diese Beschränkungen spannen einen Stellgrößenraum $\Omega$ (Hyperkubus) auf:

$$(41) \quad \Omega := [u_{1,min}, u_{1,max}] \text{ x } \dots \text{ x } [u_{m,min}, u_{m,max}]$$

Der in das entkoppelte System transformierte Stellgrößenraum $\Omega_Q$ ergibt sich dann zu:

$$(42) \quad \Omega_V = Q^{-1}(\Omega).$$

Diese Transformation ist linear. Sofern für die Determinante der Transformationsmatrix $Q^{-1}$ gilt: $\det V^{-1} = 1$, ist der Hyperkubus rotiert, und für $\det V^{-1} = -1$ ist der Hyperkubus reflektiert.

Wesentlich ist weiterhin, dass nach der Transformation der Beschränkungen $u_{m,min}$ und $u_{m,max}$ in das entkoppelte System, die oben angeführten Werte $u_{m,min}$, $u_{m,max}$ nicht mehr unabhängig voneinander sind. Das bedeutet, dass in dem entkoppelten System $BG_E$, die Beschränkungen $u_{m,min}$, $u_{m,max}$ grundsätzlich nicht entkoppelt sind. Um eine analytische Lösung im entkoppelten System dennoch zu ermöglichen, wird derjenige größte Hyperkubus $\Omega_V'$ im transformierten System gesucht, der vollständig in den ursprünglichen Grenzen (siehe Gl. (41)) des rücktransformierten Hyperkubus $\Omega'$ liegt. Für diesen Hyperkubus $\Omega_V'$ sind die Stellgrößen $u_m^*(t)$ und die Beschränkungen $u_{m,min}$, $u_{m,max}$ unabhängig, d.h. entkoppelt, so dass die entkoppelten Bewegungsgleichungen analytisch lösbar sind. Nachdem die Stellgrößentrajektorien $uT_m^*(t)$ und Zustandstrajektorie $ZT^*(t)$ im entkoppelten System ermittelt wurden, werden diese in das ursprüngliche gekoppelte System rücktransformiert. Aus der Stellgrößentrajektorie $uT_m^{**}(t)$ werden die Stellgrößen $u_m(t_{k+1})$ für den nächsten Zeitschritt k+1 ermittelt und weiterhin werden die Stellgrößen $u_m(t_{k+1})$ zur Steuerung oder Regelung der Motoren $MOT_m$ verwendet.

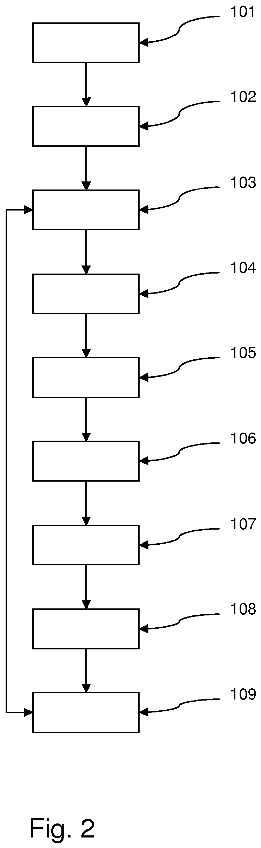

**Fig. 2** zeigt hierzu einen schematisierten Ablauf für das vorstehend beschriebene Ausführungsbeispiel des vorgeschlagenen Verfahrens zum Steuern/ Regeln von Motoren $MOT_m$ eines Roboter-Manipulators, mit m = 1, 2, ...M , wobei der Roboter-Manipulator Roboterglieder aufweist, die über eine Anzahl N Gelenkverbindungen $GEL_n$ verbunden sind, mit n = 1, 2, ..., N; wobei gilt N = M und n = m, Gelenkwinkel der Gelenkverbindungen $GEL_n$ mittels zugeordneter Motoren $MOT_m$ einstellbar sind; $Z(t_k) = \{z_p(t_k)\}$ ein Zustand der Roboterglieder in einem Zeitschritt $t_k$ ist, wobei gilt: k = 0, 1, 2, 3, ... und p = 1, 2, ..., P; ein erstes System gekoppelter Bewegungsgleichungen $BG_G$ vorgegeben ist, das eine Rigid-Body-Dynamik oder eine Flexible-Body-Dynamik der verbundenen Roboterglieder beschreibt, im ersten System der Bewegungsgleichungen $BG_G$ $u_m(t_k)$ eine Stellgröße für den jeweiligen Motor $MOT_m$ ist, und für das erste System der gekoppelten Bewegungsgleichungen $BG_G$ Beschränkungen der Stellgrößen $u_m(t_k)$ und Beschränkungen von Zuständen $Z(t_k)$ der verbundenen Roboterglieder vorgegeben sind, mit folgenden Schritten.

In einem Schritt 101 erfolgt für das erste System gekoppelter Bewegungsgleichungen $BG_G$ ein Bereitstellen eines zweiten Systems von lokal äquivalenten entkoppelten Bewegungsgleichungen $BG_E$, das die Rigid-Body-Dynamik oder die Flexible-Body-Dynamik der verbundenen Roboterglieder beschreibt. In einem Schritt **102** erfolgt ein Bereitstellen von in das zweite System transformierten Beschränkungen der Stellgrößen $u_m(t_k)$ und von in das zweite System transformierten Beschränkungen der Zustände $Z(t_k)$. In einem Schritt **103** erfolgt ein Bereitstellen des in das zweite System transformierten Zustands $Z(t_k)$ als $Z^*(t_k)$. In einem Schritt **104** erfolgt für das zweite System entkoppelter Bewegungsgleichungen $BG_E$ ein Vorgeben eines Zielzustandes $SZ^*$ des Roboter-Manipulators, der ausgehend von dem Zustand $Z^*(t_k)$ erreicht werden soll, und dem Vorgeben einer oder mehrerer Bedingungen $BD^*$ und/oder einer oder mehrerer Kennzahlen $KZ^*$, die definieren, wie der Zielzustand $SZ^*$ erreicht werden soll. In einem Schritt **105** erfolgt in dem zweiten System der entkoppelten Bewegungsgleichungen $BG_E$ ein Prädizieren einer Zustandstrajektorie $ZT^*(t)$ und zugeordneten Stellgrößentrajektorien $uT^*_m(t)$ abhängig von dem Zustand $Z^*(t_k)$ und dem Zielzustand $SZ^*$ unter Einhaltung der Bedingungen $BD^*$, der Kennzahlen $KZ^*$, der transformierten Beschränkungen der Stellgrößen $u_m(t_k)$, und der transformierten Beschränkungen der Zustände $Z(t_k)$ für einen Zeitraum von t = $t_k$ bis t = $t_{k+W}$, wobei $\Delta t = t_{k+W} - t_k$ ein vorgegebener Prädiktionszeitraum ist. In einem Schritt **106** erfolgt ein Transformieren der Stellgrößentrajektorien $uT^*_m(t)$ und der Zustandstrajektorien $ZT^*(t)$ in das erste System der gekoppelten Bewegungsgleichungen $BG_G$ zur Erzeugung von Stellgrößentrajektorien $uT_m^{**}(t)$ und von Zustandstrajektorien $ZT^{**}(t)$. In einem Schritt **107** erfolgt aus den Stellgrößentrajektorien $uT_m^{**}(t)$ ein Ermitteln von Stellgrößen $u_m(t_{k+1})$ für den Zeitschritt k+1 und ein Regeln der Motoren $MOT_m$ mit den Stellgrößen $u_m(t_{k+1})$. In einem Schritt **108** erfolgt aus den Zustandstrajektorien $ZT^{**}(t)$ und/oder auf Basis von Sensordaten eines Erfassungssystems des Zustands $Z(t)$ ein Ermitteln des Zustands $Z(t_{k+1})$ für den Zeitschritt k+1. In einem Schritt **109** erfolgt für $Z(t_k) = Z(t_{k+1})$ ein erneutes Durchlaufen des Verfahrens beginnend mit Schritt **103** solange bis ein vorgegebenes Abbruchkriterium oder der Zielzustand $SZ^*$ erreicht ist. Das Verfahren wird vorteilhaft automatisch ausgeführt.

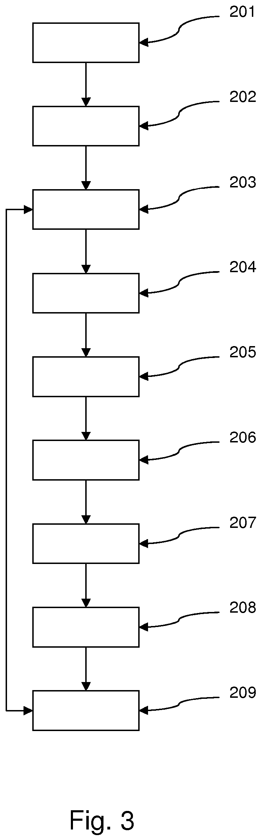

**Fig. 3** zeigt einen schematisierten Aufbau eines Ausführungsbeispiels der vorgeschlagenen Vorrichtung zur Steuerung und/oder Regelung von Motoren $MOT_m$ eines Roboter-Manipulators, mit m = 1, 2, ...M, wobei der Roboter-Manipulator Roboterglieder aufweist, die über eine Anzahl N Gelenkverbindungen $GEL_n$ verbunden sind, mit n = 1, 2, ..., N und wobei gilt N = M und n = m; Gelenkwinkel der Gelenkverbindungen $GEL_n$ mittels zugeordneter Motoren $MOT_m$ einstellbar sind; $Z(t_k) = \{z_p(t_k)\}$ ein Zustand der Roboterglieder in einem Zeitschritt $t_k$ ist, wobei gilt: k = 0, 1, 2, 3, ... und p = 1, 2, ..., P; ein erstes System gekoppelter Bewegungsgleichungen $BG_G$ vorgegeben ist, das eine Rigid-Body-Dynamik oder eine Flexible-Body-Dynamik der verbundenen Roboterglieder beschreibt, im ersten System der Bewegungsgleichungen $BG_G$ $u_m(t_k)$ eine Stellgröße für den jeweiligen Motor $MOT_m$ ist, und für das erste System der gekoppelten Bewegungsgleichungen $BG_G$ Beschränkungen der Stellgrößen $u_m(t_k)$ und Beschränkungen von Zuständen $Z(t_k)$ der verbundenen Roboterglieder vorgegeben sind. Die Vorrichtung umfasst ein Mittel **201,** mit dem für das erste System gekoppelter Bewegungsgleichungen $BG_G$ ein zweites System von lokal äquivalenten entkoppelten Bewegungsgleichungen $BG_E$, das die Rigid-Body-Dynamik oder die Flexible-Body-Dynamik der verbundenen Roboterglieder beschreibt, bereitgestellt wird; ein Mittel **202,** mit dem in das zweite System transformierte Beschränkungen der Stellgrößen $u_m(t_k)$ und in das zweite System transformierte Beschränkungen der Zustände $Z(t_k)$ bereitgestellt werden; ein Mittel **203,** mit dem der in das zweite System transformierte Zustand $Z(t_k)$ als $Z^*(t_k)$ bereitgestellt wird; ein Mittel **204,** mit dem für das zweite System entkoppelter Bewegungsgleichungen $BG_E$ ein Zielzustand $SZ^*$ des Roboter-Manipulators, der ausgehend von dem Zustand $Z^*(t_k)$ erreicht werden soll, und eine oder mehrere Bedingungen $BD^*$ und/oder eine oder mehrere Kennzahlen $KZ^*$, die definieren, wie der Zielzustand $SZ^*$ erreicht werden soll, vorgegeben werden; ein Mittel **205,** mit dem in dem zweiten System der entkoppelten Bewegungsgleichungen $BG_E$ eine Zustandstrajektorie $ZT^*(t)$ und zugeordnete Stellgrößentrajektorien $uT^*_m(t)$ abhängig von dem Zustand $Z^*(t_k)$ und dem Zielzustand $SZ^*$ unter Einhaltung der Bedingungen $BD^*$, der Kennzahlen $KZ^*$, der transformierten Beschränkungen der Stellgrößen $u_m(t_k)$, und der transformierten Beschränkungen der Zustände $Z(t_k)$ für einen Zeitraum von t = $t_k$ bis t = $t_{k+W}$ prädiziert werden, wobei $\Delta t = t_{k+W} - t_k$ ein vorgegebener Prädiktionszeitraum ist; ein Mittel 206, mit dem die Stellgrößentrajektorien $uT^*_m(t)$ und die Zustandstrajektorien $ZT^*(t)$ in das erste System der gekoppelten Bewegungsgleichungen $BG_G$ zur Erzeugung von Stellgrößentrajektorien $uT_m^{**}(t)$ und von Zustandstrajektorien $ZT^{**}(t)$ transformiert werden; ein Mittel **207,** mit dem aus den Stellgrößentrajektorien $uT_m^{**}(t)$ Stellgrößen $u_m(t_{k+1})$ für den Zeitschritt k+1 ermittelt werden und die Motoren $MOT_m$ mit den Stellgrößen $u_m(t_{k+1})$ geregelt werden, ein Mittel **208,** mit dem aus den Zustandstrajektorien $ZT^{**}(t)$ und/oder auf Basis von Sensordaten eines Erfassungssystems des Zustands $Z(t)$ der Zustand $Z(t_{k+1})$ für den Zeitschritt k+1 ermittelt wird; und ein Mittel **209,** das mit dem Mittel **203** verbunden ist, und dem Mittel **203** ein $Z(t_k)$ übermittelt, für das gilt: $Z(t_k)$ = $Z(t_{k+1})$, solange bis ein vorgegebenes Abbruchkriterium oder der Zielzustand SZ/SZ* erreicht ist.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen beispielsweise hinsichtlich der Funktion oder der Anordnung einzelner, in einer beispielhaften Ausführungsform genannter Elemente vornehmen kann, ohne den Schutzbereich zu verlassen, der durch die Ansprüche und deren rechtliche Entsprechungen, wie etwa weitergehenden Erläuterung in der Beschreibung, definiert wird.

Bezugszeichenliste

101 - 109    Verfahrensschritte
201 - 209    Mittel bspw. eines Computers

**Patentansprüche**

1.  Verfahren zum Steuern und Regeln von Motoren $MOT_m$ eines Roboters, mit m = 1, 2, ...M , wobei

    - der Roboter Roboterglieder aufweist, die über eine Anzahl N Gelenkverbindungen $GEL_n$ verbunden sind, mit n = 1, 2, ..., N;
    - Gelenkwinkel der Gelenkverbindungen $GEL_n$ mittels zugeordneter Motoren $MOT_m$ einstellbar sind;
    - $Z(t_k) = \{z_p(t_k)\}$ ein Zustand der Roboterglieder in einem Zeitschritt $t_k$ ist, wobei gilt: k = 0, 1, 2, 3, ... und p = 1, 2, ..., P;
    - ein erstes System gekoppelter Bewegungsgleichungen $BG_G$ vorgegeben ist, das eine Rigid-Body-Dynamik oder eine Flexible-Body-Dynamik der verbundenen Roboterglieder beschreibt,
    - im ersten System der Bewegungsgleichungen $BG_G$ $u_m(t_k)$ eine Stellgröße für den jeweiligen Motor $MOT_m$ ist, und
    - für das erste System der gekoppelten Bewegungsgleichungen $BG_G$ Beschränkungen der Stellgrößen $u_m(t_k)$ und Beschränkungen von Zuständen $Z(t_k)$ der verbundenen Roboterglieder vorgegeben sind, mit folgenden Schritten:

        1.1. für das erste System gekoppelter Bewegungsgleichungen $BG_G$ Bereitstellen (101) eines zweiten Systems von lokal äquivalenten entkoppelten Bewegungsgleichungen $BG_E$, das die Rigid-Body-Dynamik oder die Flexible-Body-Dynamik der verbundenen Roboterglieder beschreibt;
        1.2. Bereitstellen (102) von in das zweite System transformierten Beschränkungen der Stellgrößen $u_m(t_k)$ und von in das zweite System transformierten Beschränkungen der Zustände $Z(t_k)$;
        1.3. Bereitstellen (103) des in das zweite System transformierten Zustands $Z(t_k)$ als $Z^*(t_k)$;
        1.4. für das zweite System entkoppelter Bewegungsgleichungen $BG_E$ Vorgeben (104) eines Zielzustandes SZ* des Roboter-Manipulators, der ausgehend von dem Zustand $Z^*(t_k)$ erreicht werden soll, und Vorgeben (104) einer oder mehrerer Bedingungen BD* und/oder einer oder mehrerer Kennzahlen KZ*, die definieren, wie der Zielzustand SZ* erreicht werden soll;
        1.5. in dem zweiten System der entkoppelten Bewegungsgleichungen $BG_E$ Prädizieren (105) einer Zustandstrajektorie ZT*(t) und zugeordneter Stellgrößentrajektorien $uT^*_m(t)$ abhängig von dem Zustand $Z^*(t_k)$ und dem Zielzustand SZ* unter Einhaltung der Bedingungen BD*, der Kennzahlen KZ*, der transformierten Beschränkungen der Stellgrößen $u_m(t_k)$, und der transformierten Beschränkungen der Zustände $Z(t_k)$ für einen Zeitraum von t = $t_k$ bis t = $t_{k+W}$, wobei $\Delta t = t_{k+W} - t_k$ ein vorgegebener Prädiktionszeitraum ist;
        1.6. Transformieren (106) der Stellgrößentrajektorien $uT^*_m(t)$ und der Zustandstrajektorien ZT*(t) in das erste System der gekoppelten Bewegungsgleichungen $BG_G$ zur Erzeugung von Stellgrößentrajektorien $uT_m^{**}(t)$ und von Zustandstrajektorien $ZT^{**}(t)$;

1.7. aus den Stellgrößentrajektorien $uT_m^{**}(t)$ Ermitteln (107) von Stellgrößen $u_m(t_{k+1})$ für den Zeitschritt k+1 und Regeln der Motoren $MOT_m$ mit den Stellgrößen $u_m(t_{k+1})$;

1.8. aus den Zustandstrajektorien $ZT^{**}(t)$ und/oder auf Basis von Sensordaten eines Erfassungssystems des Zustands $Z(t)$ Ermitteln (108) des Zustands $Z(t_{k+1})$ für den Zeitschritt k+1; und

1.9. für $Z(t_k) = Z(t_{k+1})$ erneutes Durchlaufen des Verfahrens beginnend mit Schritt 1.3. solange bis ein vorgegebenes Abbruchkriterium oder der Zielzustand $SZ^*$ erreicht ist.

2. Verfahren zum Steuern und Regeln von Motoren $MOT_m$ eines Roboters, mit m = 1, 2, ...M , wobei

- der Roboter Roboterglieder aufweist, die über eine Anzahl N Gelenkverbindungen $GEL_n$ verbunden sind, mit n = 1, 2, ..., N;
- Gelenkwinkel der Gelenkverbindungen $GEL_n$ mittels zugeordneter Motoren $MOT_m$ einstellbar sind;
- $Z(t_k) = \{z_p(t_k)\}$ ein Zustand der Roboterglieder in einem Zeitschritt $t_k$ ist, wobei gilt: k = 0, 1, 2, 3, ... und p = 1, 2, ..., P;
- ein erstes System gekoppelter Bewegungsgleichungen $BG_G$ vorgegeben ist, das eine Rigid-Body-Dynamik oder eine Flexible-Body-Dynamik der verbundenen Roboterglieder beschreibt,
- im ersten System der Bewegungsgleichungen $BG_G$ $u_m(t_k)$ eine Stellgröße für den jeweiligen Motor $MOT_m$ ist, und
- für das erste System der gekoppelten Bewegungsgleichungen $BG_G$ Beschränkungen der Stellgrößen $u_m(t_k)$ und Beschränkungen von Zuständen $Z(t_k)$ der verbundenen Roboterglieder vorgegeben sind, mit folgenden Schritten

2.1. für das erste System gekoppelter Bewegungsgleichungen $BG_G$ Bereitstellen (101) eines zweiten Systems von lokal äquivalenten entkoppelten Bewegungsgleichungen $BG_E$, das die Rigid-Body-Dynamik oder die Flexible-Body-Dynamik der verbundenen Roboterglieder beschreibt, und eines Regler- und/oder Steuergesetzes RG für die Stellgrößen $u_m(t_k)$;

2.2. Bereitstellen (102) von in das zweite System transformierten Beschränkungen der Stellgrößen $u_m(t_k)$, von in das zweite System transformierten Beschränkungen der Zustände $Z(t_k)$, und von dem in das zweite System transformierten Regler- und/oder Steuergesetz RG als RG*;

2.3. Bereitstellen des in das zweite System transformierten Zustands $Z(t_k)$ als $Z^*(t_k)$;

2.4. für das zweite System entkoppelter Bewegungsgleichungen $BG_E$ Vorgeben einer oder mehrerer Bedingungen BD* und/oder einer oder mehrerer Kennzahlen KZ*, die definieren, in welchem Rahmen das Regler- und/oder Steuergesetz RG angewendet werden soll,

2.5. in dem zweiten System der entkoppelten Bewegungsgleichungen $BG_E$ Prädizieren (105) einer Zustandstrajektorie $ZT^*(t)$ und zugeordneter Stellgrößentrajektorien $uT^*_m(t)$ abhängig von dem Zustand $Z^*(t_k)$ und auf Basis des in das zweite System transformierten Regler- und/oder Steuergesetzes RG unter Einhaltung der transformierten Beschränkungen der Stellgrößen $u_m(t_k)$, und der transformierten Beschränkungen der Zustände $Z(t_k)$ für einen Zeitraum von $t = t_k$ bis $t = t_{k+W}$, wobei $\Delta t = t_{k+W} - t_k$, mit W > k, ein vorgegebener Prädiktionszeitraum ist;

2.6. Transformieren (106) der Stellgrößentrajektorien $uT^*_m(t)$ und der Zustandstrajektorien $ZT^*(t)$ in das erste System der gekoppelten Bewegungsgleichungen $BG_G$ zur Erzeugung von Stellgrößentrajektorien $uT_m^{**}(t)$ und von Zustandstrajektorien $ZT^{**}(t)$;

2.7. aus den Stellgrößentrajektorien $uT_m^{**}(t)$ Ermitteln (107) von Stellgrößen $u_m(t_{k+1})$ für den Zeitschritt k+1 und Regeln der Motoren $MOT_m$ mit den Stellgrößen $u_m(t_{k+1})$;

2.8. aus den Zustandstrajektorien $ZT^{**}(t)$ und/oder auf Basis von Sensordaten eines Erfassungssystems des Zustands $Z(t)$ Ermitteln (108) des Zustands $Z(t_{k+1})$ für den Zeitschritt k+1; und

2.9. für $Z(t_k) = Z(t_{k+1})$ erneutes Durchlaufen des Verfahrens beginnend mit Schritt 2.3. solange bis ein vorgegebenes Abbruchkriterium erreicht ist.

3. Verfahren nach Anspruch 1 oder 2,
bei dem gilt: N = M und n = m.

4. Verfahren nach Anspruch 1 oder 3,
bei dem der Zielzustand SZ und SZ* zeitvariabel vorgegeben wird: SZ = SZ(t) und SZ* = SZ*(t).

5. Verfahren nach Anspruch 4,
bei dem der Zielzustand SZ(t) und SZ*(t) abhängig von in einer Umgebung des Roboters von einem Umgebungserfassungssystem erkannten Hindernissen ermittelt wird.

**6.** Verfahren nach einem der Ansprüche 1 oder 3 bis 4,
bei dem eine Bedingung BD* ist, dass der Zielzustand SZ* in minimaler Zeit erreicht wird, und/oder dass der Zielzustand SZ* mit minimalem Energiebedarf der Motoren $MOT_m$ erreicht wird und/oder dass der Zielzustand SZ* mit einem minimalen Bremsweg der Gelenkwinkel der Gelenkverbindungen $GEL_n$ erreicht wird, und/oder dass der Zielzustand SZ* mit einem minimalen Bremsweg aller verbundener Roboterglieder erreicht wird.

**7.** Verfahren nach einem der Ansprüche 1 oder 3 bis 6,
bei dem ein Anfangszustand $Z(t_k)$ ein Ruhezustand aller Roboterglieder ist, bei dem eine Gelenkwinkelgeschwindigkeit aller Gelenkverbindungen $GEL_n$ gleich Null ist, der Zielzustand SZ* ein vorgegebener Bewegungszustand der Roboterglieder ist, und der Zielzustand SZ* in einer Minimalzeit erreicht werden soll.

**8.** Verfahren nach einem der Ansprüche 1 oder 3 bis 6,
bei dem ein Anfangszustand $Z(t_k)$ ein Bewegungszustand der Roboterglieder ist, der Zielzustand SZ* ein Ruhezustand aller Roboterglieder ist, bei dem eine Gelenkwinkelgeschwindigkeit aller Gelenkverbindungen $GEL_n$ gleich Null ist, und der Zielzustand SZ* in einer Minimalzeit erreicht werden soll.

**9.** Verfahren nach einem der Ansprüche 1 bis 8,
bei dem im ersten System der gekoppelten Bewegungsgleichungen $BG_G$ ein Raum, der durch Motordrehmomente der Motoren $MOT_m$ aufgespannt ist, durch einen Hyperquader $\Omega$ beschrieben ist, dessen Transformation in das zweite System der entkoppelten Bewegungsgleichungen $BG_E$ einen Hyperquader $\Omega_V$ ergibt, wobei im zweiten System basierend auf dem Hyperquader $\Omega_V$ ein größtmöglicher Hyperquader $\Omega_V{'}$ ermittelt wird, für den gilt, dass eine Rücktransformation des Hyperquaders $\Omega_V{'}$ in das erste System vollständig innerhalb der Grenzen des Hyperquaders $\Omega$ liegt, und wobei das Ermitteln der Stellgrößen $u_i{*}(t)$ nur auf dem Hyperquader $\Omega_V{'}$ erfolgt.

**10.** Vorrichtung zum Steuern und Regeln von Motoren $MOT_m$ eines Roboters, mit m = 1, 2, ... M nach einem Verfahren gemäß den Ansprüchen 1 oder 3 bis 9, wenn die Ansprüche 3 bis 9 von Anspruch 1 abhängen, wobei,

- der Roboter Roboterglieder aufweist, die über eine Anzahl N Gelenkverbindungen $GEL_n$ verbunden sind, mit n = 1, 2, ..., N;
- Gelenkwinkel der Gelenkverbindungen $GEL_n$ mittels zugeordneter Motoren $MOT_m$ einstellbar sind;
- $Z(t_k) = \{z_p(t_k)\}$ ein Zustand der Roboterglieder in einem Zeitschritt $t_k$ ist, wobei gilt: k = 0, 1, 2, 3, ... und p = 1, 2, ..., P;
- ein erstes System gekoppelter Bewegungsgleichungen $BG_G$ vorgegeben ist, das eine Rigid-Body-Dynamik oder eine Flexible-Body-Dynamik der verbundenen Roboterglieder beschreibt,
- im ersten System der Bewegungsgleichungen $BG_G$ $u_m(t_k)$ eine Stellgröße für den jeweiligen Motor $MOT_m$ ist, und
- für das erste System der gekoppelten Bewegungsgleichungen $BG_G$ Beschränkungen der Stellgrößen $u_m(t_k)$ und Beschränkungen von Zuständen $Z(t_k)$ der verbundenen Roboterglieder vorgegeben sind, umfassend:

    10.1. ein Mittel (201), mit dem für das erste System gekoppelter Bewegungsgleichungen $BG_G$ ein zweites System von lokal äquivalenten entkoppelten Bewegungsgleichungen $BG_E$, das die Rigid-Body-Dynamik oder die Flexible-Body-Dynamik der verbundenen Roboterglieder beschreibt, bereitgestellt wird;

    10.2. ein Mittel (202), mit dem in das zweite System transformierte Beschränkungen der Stellgrößen $u_m(t_k)$ und in das zweite System transformierte Beschränkungen der Zustände $Z(t_k)$; bereitgestellt werden;

    10.3. ein Mittel (203), mit dem der in das zweite System transformierte Zustand $Z(t_k)$ als $Z{*}(t_k)$ bereitgestellt wird;

    10.4. ein Mittel (204), mit dem für das zweite System entkoppelter Bewegungsgleichungen $BG_E$ ein Zielzustand SZ* des Roboter-Manipulators, der ausgehend von dem Zustand $Z{*}(t_k)$ erreicht werden soll, und eine oder mehrere Bedingungen BD* und/oder eine oder mehrere Kennzahlen KZ*, die definieren, wie der Zielzustand SZ* erreicht werden soll, vorgegeben werden;

    10.5. ein Mittel (205), mit dem in dem zweiten System der entkoppelten Bewegungsgleichungen $BG_E$ eine Zustandstrajektorie ZT*(t) und zugeordnete Stellgrößentrajektorien $uT{*}_m(t)$ abhängig von dem Zustand $Z{*}(t_k)$ und dem Zielzustand SZ* unter Einhaltung der Bedingungen BD*, der Kennzahlen KZ*, der transformierten Beschränkungen der Stellgrößen $u_m(t_k)$, und der transformierten Beschränkungen der Zustände $Z(t_k)$ für einen Zeitraum von t = $t_k$ bis t = $t_{k+W}$ prädiziert werden, wobei $\Delta t = t_{k+W} - t_k$ ein vorgegebener Prädiktionszeitraum ist;

    10.6. ein Mittel (206), mit dem die Stellgrößentrajektorien $uT{*}_m(t)$ und die Zustandstrajektorien ZT*(t) in das erste System der gekoppelten Bewegungsgleichungen $BG_G$ zur Erzeugung von Stellgrößentrajektorien

uT$_m$**(t) und von Zustandstrajektorien ZT**(t) transformiert werden;

10.7. ein Mittel (207), mit dem aus den Stellgrößentrajektorien uT$_m$**(t) Stellgrößen u$_m$(t$_{k+1}$) für den Zeitschritt k+1 ermittelt werden und die Motoren MOT$_m$ mit den Stellgrößen u$_m$(t$_{k+1}$) geregelt werden,

10.8. ein Mittel (208), mit dem aus den Zustandstrajektorien ZT**(t) und/oder auf Basis von Sensordaten eines Erfassungssystems des Zustands Z(t) der Zustand Z(t$_{k+1}$) für den Zeitschritt k+1 ermittelt wird; und

10.9. ein Mittel (209), das mit dem Mittel (203) verbunden ist, und dem Mittel (203) ein Z(t$_k$) übermittelt, für das gilt: Z(t$_k$) = Z(t$_{k+1}$), solange bis ein vorgegebenes Abbruchkriterium oder der Zielzustand SZ* erreicht ist.

**Claims**

1. Method for controlling and regulating motors MOT$_m$ of a robot, with m = 1, 2, ... M, wherein

   - The robot has robot members, which are connected by a number N of articulated joints GEL$_n$, with n = 1, 2, .... , N;
   - Joint angles of the articulated joints GEL$_n$ can be adjusted by means of associated motors MOT$_m$;
   - Z(t$_k$) = {z$_p$(t$_k$)} is a state of the robot members at a time step t$_k$, wherein: k = 0, 1, 2, 3, ... and p = 1, 2, ... , P;
   - A first system of coupled equations of motion BG$_G$ is prescribed, which describes the rigid-body dynamics, or the flexible-body dynamics, of the connected robot members,
   - In the first system of the equations of motion BG$_G$, u$_m$(t$_k$) is a control variable for the respective motor MOT$_m$, and
   - For the first system of coupled equations of motion BG$_G$, constraints of the control variables u$_m$(t$_k$) and constraints of the states Z(t$_k$) of the connected robot members are prescribed, with the following steps:

   1.1 For the first system of coupled equations of motion BGG, provision (101) of a second system of locally equivalent decoupled equations of motion BG$_E$, which describes the rigid-body dynamics, or the flexible-body dynamics, of the connected robot members;

   1.2. Provision (102) of constraints of the control variables u$_m$(t$_k$) transformed into the second system, and constraints of the states Z(t$_k$) transformed into the second system;

   1.3 Provision (103) of the state Z(t$_k$) transformed into the second system as Z*(t$_k$);

   1.4 For the second system of decoupled motion equations BGE, prescription (104) of a target state SZ* of the robot manipulator, which is to be achieved, starting from the state Z*(t$_k$), and prescription (104) of one or a plurality of conditions BD*, and/or of one or a plurality of metrics KZ*, which define how the target state SZ* is to be achieved;

   1.5 In the second system of the decoupled equations of motion BG$_E$, prediction (105) of a state trajectory ZT*(t) and associated control variable trajectories uT*$_m$(t) as a function of the state Z*(t$_k$) and the target state SZ*, subject to the conditions BD*, the metrics KZ*, the transformed constraints of the control variables u$_m$(t$_k$), and the transformed constraints of the states Z(t$_k$) for a period of time from t = t$_k$ to t= t$_{k+W}$, where Δt = t$_{k+W}$ - t, is a prescribed prediction time period;

   1.6 Transformation (106) of the control variable trajectories uT*$_m$(t) and the state trajectories ZT*(t) into the first system of coupled equations of motion BG$_G$ for the generation of control variable trajectories uT$_m$**(t) and state trajectories ZT**(t);

   1.7 From the control variable trajectories uT$_m$**(t), determination (107) of control variables u$_m$(t$_{k+1}$) for the time step k+1, and regulation of the motors MOT$_m$ with the control variables u$_m$(t$_{k+1}$);

   1.8. From the state trajectories ZT**(t), and/or on the basis of sensor data of a detection system of the state Z(t), determination (108) of the state Z(t$_{k+1}$) for the time step k+1; and

   1.9. For Z(t$_k$) = Z(t$_{k-1}$), the method is repeated, starting with step 1.3, until a prescribed termination criterion, or the target state SZ*, is achieved.

2. Method for controlling and regulating motors MOT$_m$ of a robot, with m = 1, 2, ... M, wherein

   - The robot has robot members, which are connected by a number N of articulated joints GEL$_n$, with n = 1, 2, .... , N;
   - Joint angles of the articulated joints GEL$_n$ can be adjusted by means of associated motors MOT$_m$;
   - Z(t$_k$) = {z$_p$(t$_k$)} is a state of the robot members at a time step t$_k$, wherein: k = 0, 1, 2, 3, ... and p = 1, 2, ... , P;
   - A first system of coupled equations of motion BG$_G$ is prescribed, which describes the rigid-body dynamics, or the flexible-body dynamics, of the connected robot members,
   - In the first system of the equations of motion BG$_G$, u$_m$(t$_k$) is a control variable for the respective motor MOT$_m$, and
   - For the first system of coupled equations of motion BG$_G$, constraints of the control variables u$_m$(t$_k$) and constraints of the states Z(t$_k$) of the connected robot members are prescribed, with the following steps:

2.1 For the first system of coupled equations of motion BGG, provision (101) of a second system of locally equivalent decoupled equations of motion $BG_E$, which describes the rigid-body dynamics, or the flexible-body dynamics, of the connected robot members; and a regulation, and/or control, law RG for the control variables $u_m(t_k)$;

2.2 Provision (102) of constraints of control variables $u_m(t_k)$ transformed into the second system, and constraints of states $Z(t_k)$ transformed into the second system; and the regulation, and/or control, law RG transformed into the second system as RG*;

2.3 Provision (103) of the state $Z(t_k)$ transformed into the second system as $Z^*(t_k)$;

2.4 For the second system of decoupled motion equations BGE, prescription (104) of one or a plurality of conditions BD*, and/or of one or a plurality of metrics KZ*, which define in which context the regulation, and/or control, law RG is to be applied;

2.5 In the second system of the decoupled equations of motion $BG_E$, prediction (105) of a state trajectory $ZT^*(t)$ and associated control variable trajectories $uT^*_m(t)$ as a function of the state $Z^*(t_k)$ and on the basis of the regulation, and/or control, law RG transformed into the second system, subject to the transformed constraints of the control variables $u_m(t_k)$, and the transformed constraints of the states $Z(t_k)$ for a period of time from $t = t_k$ to $t = t_{k+W}$, where $\Delta t = t_{k+W} - t_k$, with $W > k$, is a prescribed prediction time period;

2.6. Transformation (106) of the control variable trajectories $uT^*_m(t)$ and the state trajectories $ZT^*(t)$ into the first system of the coupled equations of motion $BG_G$, for the generation of control variable trajectories $uT_m^{**}(t)$ and state trajectories $ZT^{**}(t)$;

2.7 From the control variable trajectories $uT_m^{**}(t)$, determination (107) of control variables $u_m(t_{k+1})$ for the time step k+1, and regulation of the motors $MOT_m$ with the control variables $u_m(t_{k+1})$;

2.8 From the state trajectories $ZT^{**}(t)$, and/or on the basis of sensor data of a detection system of the state $Z(t)$, determination (108) of the state $Z(t_{k+1})$ for the time step k+1; and

2.9 For $Z(t_k) = Z(t_{k+1})$, the method is repeated, starting with step 2.3, until a prescribed termination criterion is achieved.

3. Method according to Claim 1 or 2, wherein:

$$N = M \text{ and } n = m.$$

4. Method according to Claim 1 or 3, in which
the target states SZ and SZ* are prescribed in a time-variable manner: $SZ = SZ(t)$ and $SZ^* = SZ^*(t)$.

5. Method according to Claim 4, in which
the target states $SZ(t)$ and $SZ^*(t)$ are determined as a function of obstacles detected in an environment of the robot by an environment detection system.

6. Method according to one of the Claims 1 or 3 to 4, in which
a condition BD* is that the target state SZ* is achieved in a minimum time, and/or that the target state SZ* is achieved with a minimum energy consumption of the motors $MOT_m$, and/or that the target state SZ* is achieved with a minimum braking path of the joint angles of the joint connections $GEL_n$, and/or that the target state SZ* is achieved with a minimum braking path of all connected robot members.

7. Method according to one of the Claims 1 or 3 to 6, in which
an initial state $Z(t_k)$ is an idle state of all robot members, in which a joint angular velocity of all joint connections $GEL_n$ is equal to zero, the target state SZ* is a prescribed state of motion of the robot members, and the target state SZ* is to be achieved in a minimum time.

8. Method according to one of the Claims 1 or 3 to 6, in which
an initial state $Z(t_k)$ is a state of motion of the robot members, the target state SZ* is an idle state of all robot members, in which a joint angular velocity of all joint connections $GEL_n$ is zero, and the target state SZ* is to be achieved in a minimum time.

9. Method according to one of the Claims 1 to 8, in which
in the first system of the coupled equations of motion $BG_G$, a space traversed by motor torques of the motors $MOT_m$ is described by a hypercuboid $\Omega$, whose transformation into the second system of decoupled equations of motion $BG_E$ yields a hypercuboid $\Omega_V$, wherein in the second system, based on the hypercuboid $\Omega_V$, a largest possible

hypercuboid $\Omega_V$' is determined, for which it applies that a reverse transformation of the hypercuboid $\Omega_V$' into the first system lies completely within the limits of the hypercuboid $\Omega$, and wherein the determination of the control variables $u_i$*(t) only takes place on the hypercuboid $\Omega_V$'.

**10.** Device for controlling and regulating motors $MOT_m$ of a robot, with m = 1, 2, ... M in accordance with a method according to Claims 1 or 3 to 9, if the Claims 3 to 9 depend on Claim 1, wherein,

- The robot has robot members, which are connected by a number N of articulated joints GELn, with n = 1, 2, .... , N;
- Joint angles of the articulated joints $GEL_n$ can be adjusted by means of associated motors $MOT_m$;
- $Z(t_k) = \{z_p(t_k)\}$ is a state of the robot members at a time step $t_k$, wherein: k = 0, 1, 2, 3, ... and p = 1, 2, ... , P;
- A first system of coupled equations of motion $BG_G$ is prescribed, which describes the rigid-body dynamics, or the flexible-body dynamics, of the connected robot members,
- In the first system of the equations of motion $BG_G$, $u_m(t_k)$ is a control variable for the respective motor $MOT_m$, and
- For the first system of coupled equations of motion $BG_G$ constraints on the control variables $u_m(t_k)$ and constraints on states $Z(t_k)$ of the connected robot members are prescribed, comprising:

10.1 A means (201), with which, for the first system of coupled equations of motion $BG_G$, a second system of locally equivalent decoupled equations of motion BGE, which describes the rigid-body dynamics, or the flexible-body dynamics, of the connected robot members, is provided;

10.2 A means (202), with which constraints on the control variables $u_m(t_k)$, transformed into the second system, and constraints on the states $Z(t_k)$, transformed into the second system, are provided;

10.3. A means (203), with which the state $Z(t_k)$, transformed into the second system as $Z$*$(t_k)$, is provided;

10.4 A means (204), with which, for the second system of decoupled equations of motion $BG_E$, a target state SZ* of the robot manipulator, which is to be achieved starting from the state $Z$*$(t_k)$, and one or a plurality of conditions BD*, and/or one or a plurality of metrics KZ*, which define how the target state SZ* is to be achieved, are prescribed;

10.5 A means (205), with which, in the second system of the decoupled equations of motion $BG_E$ , a state trajectory ZT*(t) and associated control variable trajectories uT*m(t) are predicted as a function of the state Z*(tk) and the target state SZ*, subject to the conditions BD*, the metrics KZ*, the transformed constraints on the control variables $u_m(t_k)$, and the transformed constraints on the states $Z(t_k)$, for a period of time from t = $t_k$ to t = $t_{k+w}$, where $\Delta t = t_{k+w}$ - t. is a prescribed prediction time period;

10.6 A means (206), with which the control variable trajectories uT*$_m$(t) and the state trajectories ZT*(t) are transformed into the first system of coupled equations of motion $BG_G$ for the generation of control variable trajectories uT$_m$**(t) and state trajectories ZT**(t);

10.7 A means (207), with which control variables $u_m(t_{k+1})$ for the time step k+1 are determined from the control variable trajectories uT$_m$**(t), and the motors MOTm are regulated with the control variables $u_m(t_{k+1})$;

10.8 A means (208), with which the state $Z(t_{k+1})$ for the time step k+1 is determined from the state trajectories ZT**(t), and/or on the basis of sensor data of a detection system of the state Z(t); and

10.9. A means (209), which is connected to the means (203), and transmits to the means (203) a $Z(t_k)$, for which: $Z(t_k) = Z(t_{k+1})$, until a prescribed termination criterion or the target state SZ* is achieved.

**Revendications**

**1.** Procédé de commande et réglage de moteurs $MOT_m$ d'un robot, avec m = 1, 2, ... M, dans lequel

- le robot présente des membres de robots qui sont reliés par un nombre N de liaisons articulées $GEL_n$, avec n = 1, 2, ..., N ;
- des angles articulés des liaisons articulées $GEL_n$ peuvent être réglés au moyen de moteurs $MOT_m$ correspondants ;
- $Z(t_k) = \{Z_p(t_k)\}$ est un état des membres de robot dans un incrément de temps $t_k$, dans lequel vaut : k = 0, 1, 2, 3, ... et p = 1, 2, ..., P ;
- un premier système d'équations de mouvement couplées $BG_G$ est prédéfini, qui décrit une dynamique de corps rigide ou une dynamique de corps flexible des membres de robot liés,
- une grandeur de réglage pour le moteur $MOT_m$ respectif est présente dans le premier système des équations de mouvement $BG_G$ $u_m(t_k)$, et
- des limitations des grandeurs de réglage $u_m(t_k)$ et des limitations d'états $Z(t_k)$ des membres de robot reliés sont prédéfinies pour le premier système des équations de mouvement couplées $BG_G$, comprenant les étapes suivantes :

> 1.1 Pour le premier système d'équations de mouvement couplées $BG_G$, fourniture (101) d'un second système d'équations de mouvement découplées $BG_E$ équivalentes locales qui décrit la dynamique de corps rigide ou la dynamique de corps flexible des membres de robot liés ;
>
> 1.2 Fourniture (102) de limitations des grandeurs de réglage $u_m(t_k)$ transformées dans le second système et de limitations des états $Z(t_k)$ transformées dans le second système ;
>
> 1.3 Fourniture (103) de l'état $Z(t_k)$ transformé dans le second système en tant que $Z^*(tk)$ ;
>
> 1.4 Pour des équations de mouvement découplées $BG_E$, pré-définition (104) d'un état cible $SZ^*$ du manipulateur du robot qui peut être atteint en partant de l'état $Z^*(t_k)$, et pré-définition (104) d'une ou plusieurs conditions $BD^*$ et/ou d'un ou plusieurs nombres caractéristiques $KZ^*$ qui définissent comment l'état cible $SZ^*$ doit être atteint ;
>
> 1.5 Dans le second système des équations de mouvement découplées $BG_E$, prédiction (105) d'une trajectoire d'état $ZT^*(t)$ et de trajectoires de grandeurs de réglage $uT^*_m(t)$ correspondantes en fonction de l'état $Z^*(tk)$ et de l'état cible $SZ^*$ en tenant compte des conditions $BD^*$, des nombres caractéristiques $KZ^*$, des limitations transformées des grandeurs de réglage $u_m(t_k)$ et des limitations transformées des états $Z(t_k)$ pour une période de $t = t_k$ jusqu'à $t = t_{k+w}$, dans lequel $\Delta t = t_{k+w} - t_k$ est une période de prédiction prédéfinie ;
>
> 1.6 Transformation (106) des trajectoires de grandeurs de réglage $uT^*_m(t)$ et des trajectoires d'état $ZT^*(t)$ dans le premier système des équations de mouvement couplées $BG_G$ pour produire des trajectoires de grandeurs de réglage $uT^{**}_m(t)$ et des trajectoires d'état $ZT^{**}(t)$ ;
>
> 1.7 À partir des trajectoires de grandeurs de réglage $uT^{**}_m(t)$, détermination (107) de grandeurs de réglage $u_m(t_{k+1})$ pour l'incrément de temps $k+1$ et réglage des moteurs $MOT_m$ avec les grandeurs de réglage $u_m(t_{k+1})$ ;
>
> 1.8 À partir des trajectoires d'état $ZT^{**}(t)$ et/ou sur la base de données de capteur d'un système de détection de l'état $Z(t)$, détermination (108) de l'état $Z(t_{k+1})$ pour l'incrément de temps $k+1$ ; et
>
> 1.9 Pour $Z(t_k) = Z(t_{k+1})$, nouvelle exécution du procédé en commençant par l'étape 1.3 jusqu'à ce qu'un critère d'interruption prédéfini ou l'état cible $SZ^*$ soit atteint.

**2.** Procédé de commande et réglage de moteurs $MOT_m$ d'un robot, avec $m = 1, 2, ...M$, dans lequel

> - le robot présente des membres de robots qui sont reliés par un nombre N de liaisons articulées $GEL_n$, avec $n = 1, 2, ..., N$ ;
> - des angles articulés des liaisons articulées $GEL_n$ peuvent être réglés au moyen de moteurs $MOT_m$ correspondants ;
> - $Z(t_k) = \{Z_p(t_k)\}$ est un état des membres de robot dans un incrément de temps $t_k$, dans lequel vaut : $k = 0, 1, 2, 3, ...$ et $p = 1, 2, ..., P$ ;
> - un premier système d'équations de mouvement couplées $BG_G$ est prédéfini, qui décrit une dynamique de corps rigide ou une dynamique de corps flexible des membres de robot liés,
> - une grandeur de réglage pour le moteur $MOT_m$ respectif est présente dans le premier système des équations de mouvement $BG_G$ $u_m(t_k)$, et
> - des limitations des grandeurs de réglage $u_m(t_k)$ et des limitations d'états $Z(t_k)$ des membres de robot reliés sont prédéfinies pour le premier système des équations de mouvement couplées $BG_G$, comprenant les étapes suivantes :

> 2.1 Pour le premier système d'équations de mouvement couplées $BG_G$, fourniture (101) d'un second système d'équations de mouvement découplées $BG_E$ équivalentes locales qui décrit la dynamique de corps rigide ou la dynamique de corps flexible des membres de robot liés, et d'une loi de réglage et/ou de commande RG pour les grandeurs de réglage $u_m(t_k)$ ;
>
> 2.2 Fourniture (102) de limitations des grandeurs de réglage $u_m(t_k)$ transformées dans le second système et de limitations des états $Z(t_k)$ transformées dans le second système et de la loi de réglage et/ou de commande RG transformée dans le second système en tant que $RG^*$ ;
>
> 2.3 Fourniture de l'état $Z(t_k)$ transformé dans le second système en tant que $Z^*(t_k)$ ;
>
> 2.4 Pour le second système d'équations de mouvement découplées $BG_E$, pré-définition d'une ou plusieurs conditions $BD^*$ et/ou d'un ou plusieurs nombres caractéristiques $KZ^*$ qui définissent dans quel cadre la loi de réglage et/ou de commande RG doit être appliquée ;
>
> 2.5 Dans le second système des équations de mouvement découplées $BG_E$, prédiction (105) d'une trajectoire d'état $ZT^*(t)$ et de trajectoires de grandeurs de réglage $uT^*_m(t)$ correspondantes en fonction de l'état $Z^*(t_k)$ et sur la base de la loi de réglage et/ou de commande RG transformée dans le second système en tenant compte des limitations transformées des grandeurs de réglage $u_m(t_k)$ et des limitations transformées des états $Z(t_k)$ pour une période de $t = t_k$ à $t = t_{k+w}$, dans lequel $\Delta t = t_{k+w} - t_{k1}$, avec $W > k$ est une période de prédiction prédéfinie ;

2.6 Transformation (106) des trajectoires de grandeurs de réglage $uT^*_m(t)$ et des trajectoires d'état $ZT^*(t)$ dans le premier système des équations de mouvement couplées $BG_G$ pour produire des trajectoires de grandeurs de réglage $uT^{**}_m(t)$ et des trajectoires d'état $ZT^{**}(t)$ ;

2.7 À partir des trajectoires de grandeurs de réglage $uT^{**}_m(t)$, détermination (107) de grandeurs de réglage $u_m(t_{k+1})$ pour l'incrément de temps k+1 et réglage des moteurs $MOT_m$ avec les grandeurs de réglage $u_m(t_{k+1})$ ;

2.8 À partir des trajectoires d'état $ZT^{**}(t)$ et/ou sur la base de données de capteur d'un système de détection de l'état $Z(t)$, détermination (108) de l'état $Z(t_{k+1})$ pour l'incrément de temps k+ 1 ; et

2.9 Pour $Z(t_k) = Z(t_{k+1})$, nouvelle exécution du procédé en commençant par l'étape 2.3 jusqu'à ce qu'un critère d'interruption prédéfini soit atteint.

3.  Procédé selon la revendication 1 ou 2,
    dans lequel vaut : N = M et n = m.

4.  Procédé selon la revendication 1 ou 3,
    dans lequel l'état cible SZ et SZ* est déterminé en étant variable dans le temps : SZ = SZ(t) et SZ* = SZ*(t).

5.  Procédé selon la revendication 4,
    dans lequel l'état cible SZ(t) et SZ*(t) est déterminé indépendamment d'obstacles reconnus dans un environnement du robot par un système de détection d'environnement.

6.  Procédé selon l'une des revendications 1 ou 3 à 4,
    dans lequel il est une condition BD* que l'état cible SZ* est atteint en temps minimal et/ou que l'état cible SZ* est atteint avec un besoin en énergie minimal des moteurs $MOT_m$ et/ou que l'état cible SZ* est atteint avec un trajet de freinage minimal des angles articulés des liaisons articulées $GEL_n$ et/ou que l'état cible SZ*est atteint avec un trajet de freinage minimal de tous les membres de robot reliés .

7.  Procédé selon l'une des revendications 1 ou 3 à 6,
    dans lequel un état de départ $Z(t_k)$ est un état de repos de tous les membres de robot, dans lequel une vitesse d'angle articulé de toutes les liaisons articulées $GEL_n$ est égale à zéro, l'état cible SZ* est un état de mouvement prédéfini des membres de robot, et l'état cible SZ* peut être atteint dans un temps minimal.

8.  Procédé selon l'une des revendications 1 ou 3 à 6,
    dans lequel un état de départ $Z(t_k)$ est un état de mouvement des membres de robot, dans lequel l'état cible SZ* est un état de repos de tous les membres de robot, dans lequel une vitesse d'angle articulé de toutes les liaisons articulées $GEL_n$ est égale à zéro et l'état cible SZ* peut être atteint dans un temps minimal.

9.  Procédé selon l'une des revendications 1 à 8,
    dans lequel, dans le premier système des équations de mouvement couplées $BG_G$, un espace qui est fixé par des couples de rotation de moteur des moteurs $MOT_m$ est décrit par un hyper-rectangle $\Omega$ dont la transformation dans le second système des équations de mouvement découplées $BG_E$ fournit un hyper-rectangle $\Omega_v$, dans lequel dans le second système, en se basant sur l'hyper-rectangle $\Omega_v$, un hyper-rectangle $\Omega_v'$ le plus grand possible est déterminé pour lequel vaut qu'une transformée inverse de l'hyper-rectangle $\Omega_v'$ dans le premier système est située intégralement dans les limites de l'hyper-rectangle $\Omega$, et dans lequel la détermination des grandeurs de réglage $u_i^*(t)$ n'est effectuée que sur l'hyper-rectangle $\Omega_v'$.

10. Procédé de commande et réglage de moteurs $MOT_m$ d'un robot, avec m = 1, 2, ...M selon un procédé selon les revendications 1 ou 3 à 9, lorsque les revendications 3 à 9 dépendent de la revendication 1, dans lequel

    - le robot présente des membres de robots qui sont reliés par un nombre N de liaisons articulées $GEL_n$, avec n = 1, 2, ..., N ;
    - des angles articulés des liaisons articulées $GEL_n$ peuvent être réglés au moyen de moteurs MOTm correspondants ;
    - $Z(t_k) = \{Z_p(t_k)\}$ est un état des membres de robot dans un incrément de temps $t_k$, dans lequel k = 0, 1, 2, 3, ... et p = 1, 2, ..., P ;

- un premier système d'équations de mouvement couplées $BG_G$ est prédéfini, qui décrit une dynamique de corps rigide ou une dynamique de corps flexible des membres de robot liés,
- une grandeur de réglage pour le moteur $MOT_m$ respectif est présente dans le premier système des équations de mouvement $BG_G$ $u_m(t_k)$, et
- des limitations des grandeurs de réglage $U_m(t_k)$ et des limitations d'états $Z(t_k)$ des membres de robot reliés sont prédéfinies pour le premier système des équations de mouvement couplées $BG_G$, comprenant :

10.1 Un moyen (201) avec lequel pour le premier système d'équations de mouvement couplées $BG_G$, un second système d'équations de mouvement découplées $BG_E$ équivalentes locales est fourni, qui décrit la dynamique de corps rigide ou la dynamique de corps flexible des membres de robot liés ;

10.2 Un moyen (202) avec lequel des limitations des grandeurs de réglage $u_m(t_k)$ transformées dans le second système et des limitations des états $Z(t_k)$ transformées dans le second système sont fournies ;

10.3 Un moyen (203) avec lequel l'état $Z(t_k)$ transformé dans le second système est fourni en tant que $Z^*(t_k)$ ;

10.4 Un moyen (204) avec lequel pour le second système d'équations de mouvement découplées $BG_E$, un état cible $SZ^*$ du manipulateur du robot qui peut être atteint en partant de l'état $Z^*(t_k)$, et une ou plusieurs conditions $BD^*$ et/ou d'un ou plusieurs nombres caractéristiques $KZ^*$ qui définissent comment l'état cible $SZ^*$ doit être atteint, sont prédéfinis ;

10.5 Un moyen (205) avec lequel dans le second système des équations de mouvement découplées $BG_E$, une trajectoire d'état $ZT^*(t)$ et des trajectoires de grandeurs de réglage $uT^*_m(t)$ correspondantes sont prédites en fonction de l'état $Z^*(t_k)$ et de l'état cible $SZ^*$ en tenant compte des conditions $BD^*$, des nombres caractéristiques $KZ^*$, des limitations transformées des grandeurs de réglage $u_m(t_k)$ et des limitations transformées des états $Z(t_k)$ pour une période de $t = t_k$ jusqu'à $t = t_{k+w}$ , dans lequel $\Delta t = t_{k+w} - t_k$ est une période de prédiction prédéfinie ;

10.6 Un moyen (206) avec lequel les trajectoires de grandeurs de réglage $uT^*_m(t)$ et les trajectoires d'état $ZT^*(t)$ dans le premier système des équations de mouvement couplées $BG_G$ sont transformées pour produire des trajectoires de grandeurs de réglage $uT^{**}_m(t)$ et des trajectoires d'état $ZT^{**}(t)$ ;

10.7 Un moyen (207) avec lequel à partir des trajectoires de grandeurs de réglage $uT^{**}_m(t)$ , des grandeurs de réglage $u_m(t_{k+1})$ pour l'incrément de temps $k+1$ sont déterminées et les moteurs $MOT_m$ sont réglés avec les grandeurs de réglage $u_m(t_{k+1})$ ;

10.8 Un moyen (208) avec lequel l'état $Z(t_{k+1})$ pour l'incrément de temps $k+1$ est déterminé à partir des trajectoires d'état $ZT^{**}(t)$ et/ou sur la base de données de capteur d'un système de détection de l'état $Z(t)$ ; et

10.9 Un moyen (209) qui est relié au moyen (203) et transmet au moyen (203) un état $Z(t_k)$, pour lequel vaut : $Z(t_k) = Z(t_{k+1})$, jusqu'à ce qu'un critère d'interruption prédéfini ou l'état cible $SZ^*$ soit atteint.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **E. G. GILBERT ; D. W. JOHNSON ; S. S. KEERTHI.** A fast procedure for computing the distance between complex objects in three-dimensional space. *IEEE Journal of Robotics and Automation,* 1998, vol. 4 (2), 193-203
- **U. FRESE ; H. TÄUBIG.** A new library for real-time continuous collision detection. *Proceedings of 7th German Conference on Robotics (ROBOTIK2012),* 2012, 1-5
- **S. HADDADIN ; S. HADDADIN ; A. KHOURY ; T. ROKAHR ; S. PARUSEL ; R. BURGKART ; A. BICCHI ; A. ALBU-SCHÄFFER.** On making robots understand safety: Embedding injury knowledge into control. *International Journal of Robotics,* 2012

- **O. KHATIB.** Inertial properties in robotic manipulation: an object-level framework. *Int. Journal of Robotics Research,* 1995, vol. 14 (1), 19-36
- **A. DE LUCA ; A. ALBU-SCHÄFFER ; S. HADDADIN ; G. HIRZINGER.** Collision detection and safe reaction with the DLR-III lightweight manipulator arm. *IEEE/RSJ Int. Conf. on Intelligent Robots and Systems (IROS2006), Beijing, China,* 2006, 1623-1630